# EUROPEAN PATENT APPLICATION

(11) **EP 4 171 072 A1**
(43) Date of publication of application: **26.04.2023**
(21) Application number: 21841887.9
(22) Date of filing: 13.07.2021

(54) **TRUSTED COMMUNICATION METHOD AND RELATED APPARATUS**

(30) Priority: 16.07.2020 CN 202010688400
(71) Applicant: Huawei Technologies Co., Ltd., Longgang District, Shenzhen, Guangdong 518129 (CN)
(72) Inventor: ZHOU, Yan, Shenzhen, Guangdong 518129 (CN); HE, Chengdong, Shenzhen, Guangdong 518129 (CN); LIN, Qingchun, Shenzhen, Guangdong 518129 (CN)
(74) Representative: Huawei European IPR
(86) International application number: PCT/CN2021/105890
(87) International publication number: WO 2022/012490

(57) **Abstract**

Embodiments of this application disclose a trusted communication method. A core network device (for example, a session management function SMF, an access and mobility management function AMF, and/or a user plane function UPF) may detect, based on trusted policy information, whether a non-access stratum NAS message and/or user data that passes through the core network device is abnormal. When it is detected that the NAS message and/or the user data is abnormal, the NAS message and/or a service corresponding to the user data may be notified and/or blocked, and exception information notification signaling may be reported to a trusted control node (an independent network function entity, an existing control network element, or an existing management network element). In this way, the trusted control node can update the trusted policy information in a timely manner, and/or notify each network element to take a trusted protection operation. This effectively improves security of a communication system.

## Description

This application claims priority to Chinese Patent Application No. 202010688400.1, filed with the China National Intellectual Property Administration on July 16, 2020 and entitled "TRUSTED COMMUNICATION METHOD AND RELATED APPARATUS", which is incorporated herein by reference in its entirety.

### TECHNICAL FIELD

This application relates to the field of communication technologies, and in particular, to a trusted communication method and a related apparatus.

### BACKGROUND

With rapid development of wireless communication technologies, a fifth generation (Fifth Generation, 5G) mobile communication network (5G network for short) emerges. A conventional communication network is isolated based on security zones, and boundaries of different security zones are protected by firewall.

A network slice (Network Slice, NS) is used as an example. On a 5G network, the concept of NS is introduced to meet service requirements of different customers (such as service providers or tenants). The NS is a logically isolated network used to support a specific network capability and a network feature, and may provide an end-to-end (end-to-end, E2E) network service. For example, a terminal (user equipment, UE) may send a request message carrying identity information (for example, a subscription permanent identifier (Subscription Permanent Identifier, SUPI)) of the terminal to a network slice, to request a network function (Network Function, NF) in the network slice to establish, for the terminal, a protocol data unit (protocol data unit, PDU) session (Session) carried in the network slice, so that the terminal accesses a data network (data network, DN) based on the PDU session.

Different network slices belong to different security zones. If risks come from a same security zone (firewall), the firewall cannot provide protection. When the firewall is penetrated, the firewall cannot provide protection either. Therefore, a new trusted communication method is required to protect communication networks.

### SUMMARY

Embodiments of this application provide a trusted communication method, to improve communication security performance of a network device.

According to a first aspect, an embodiment of this application provides a trusted communication method, including:
receiving, by a session management function SMF, a non-access stratum NAS message;
obtaining, by the SMF, trusted policy information;
detecting, by the SMF based on the trusted policy information, whether the NAS message is abnormal; and
if the NAS message is abnormal, notifying and/or blocking, by the SMF, the NAS message; reporting abnormal signaling to a trusted control node; and/or reporting the abnormal signaling to an access and mobility management function AMF, where the abnormal signaling includes all or a part of the NAS message or exception rule determining information; or
if the NAS message is normal, normally executing, by the SMF, the NAS message.

In this embodiment of this application, information collected by the trusted control node from each network function (and further including a radio access network device RAN, a terminal device UE, an inter-public land mobile network user plane security function IPUPS, and/or a mobile edge computing MEC) is referred to as trusted collected information.

The following separately describes the trusted collected information and the trusted policy information.

### 1. Trusted collected information:

The trusted collected information includes the abnormal signaling, abnormal data, and/or the exception rule determining information. The abnormal signaling includes a part or all of the abnormal NAS message, a part or all of an abnormal service based architecture (Service Based Architecture, SBA) interface message, a part or all of an abnormal N2 interface message, and/or a part or all of an abnormal N4 interface message. The abnormal data includes a part or all of abnormal user data. The exception rule determining information is a determining rule generated by the network function based on the abnormal signaling and/or the abnormal data, and the exception rule determining information may be a part of the trusted policy information.

In this embodiment of this application, the information collected by the trusted control node from each network function (and further including the RAN, the UE, the IPUPS, and/or the MEC) is referred to as the trusted collected information. The trusted collected information includes but is not limited to:
a globally unique temporary UE identity (Globally Unique Temporary UE Identity, GUTI), a subscription seal identifier (Subscription Concealed Identifier, SUCI), a subscription permanent identifier (Subscription Permanent Identifier, SUPI), a quality of service (Quality of Service, QoS) parameter, a UE Internet Protocol address (UE Internet Protocol Address), a protocol data unit session identifier (PDU Session ID), core network tunnel information (CN tunnel info), and/or access network tunnel information (AN tunnel info), or the like. The trusted collected information may alternatively be a data throughput of the terminal device, positioning information of the terminal device, a registration type (registration type), a last visited tracking area identity (last visited TAI), requested network slice selection assistance information (Requested NSSAI), mapping of requested network slice selection assistance information (Mapping Of Requested NSSAI), a protocol data unit session status (PDU Session status), a selected data network name (selected DNN), a user equipment requested data network name (UE requested DNN), an AMF identifier (AMF ID), a PCF identifier (PCF ID), user location information (User location information), a radio access technology type (RAT Type), a generic public subscription identifier (GPSI), UE presence in local area data network service area (UE presence in LADN service area), single network slice selection assistance information (S-NSSAI), a requested protocol data unit session type (Request PDU Session type), a small data rate control status (Small Data Rate Control Status), a quality of service rule (QoS Rule), a quality of service flow level (QoS Flow level), a source IP (source IP), a destination IP (destination IP), a source port (source port), a destination port (destination port), a transmission control protocol (TCP), a user datagram protocol (UDP), and/or a stream control transmission protocol (SCTP).

The trusted collected information varies depending on source network functions, and is not limited herein.

### 2. Trusted policy information:

In this embodiment of this application, after collecting the trusted collected information, the trusted control node generates the trusted policy information based on the trusted collected information. The trusted policy information is for detecting whether signaling and/or user data exchanged in a communication system is secure and reliable. For example, when the data throughput of the terminal device is large in a specified time period, it is determined that the terminal device is abnormal. For example, the terminal device is an Internet of Things device (for example, a water meter), and the trusted control node determines, based on the collected trusted policy information, that the water meter uploads data on the first day of each month. When the water meter uploads a large amount of data in another time period, the trusted control node determines that the water meter is abnormal.

When the terminal device sends a large quantity of access requests to an unauthorized slice in a specific time period, it is determined that the terminal device is abnormal.

After collecting the trusted collected information, the trusted control node generates the trusted policy information based on the trusted collected information. The trusted policy information is for detecting whether signaling and/or user data exchanged in a communication system is secure and reliable.

The SMF may detect, based on the trusted policy information, whether the NAS message that passes through the SMF is abnormal. When it is detected that the NAS message is abnormal, the NAS message may be notified and/or blocked, and the abnormal signaling is reported to the trusted control node (and/or the AMF). In this way, the trusted control node can update the trusted policy information in a timely manner. This effectively improves security of the communication system.

With reference to the first aspect, in an optional implementation of the first aspect, the SMF obtains the trusted policy information from the trusted control node, where the trusted control node includes at least one of a policy control function PCF, a unified data management UDM, a network data analytics function NWDAF, or an independent network function entity.

In this embodiment of this application, the trusted control node may be an independent network function node, or may be integrated with at least one of the PCF, the UDM, or the NWDAF. The SMF may obtain the trusted policy information through a plurality of different network function nodes (the PCF, the UDM, or the NWDAF integrated with the trusted control node). This improves implementation flexibility of the solution.

With reference to the first aspect, in an optional implementation of the first aspect, the obtaining, by the SMF, trusted policy information includes:
receiving, by the SMF, user plane exception information sent by a user plane function UPF; and
generating, by the SMF, the trusted policy information based on the user plane exception information.

In this embodiment of this application, the SMF may further receive the user plane exception information sent by the user plane function UPF. The UPF detects received user data based on the trusted policy information; and when the user data is abnormal, the UPF generates the user plane exception information based on the abnormal data.

Alternatively, the user plane exception information may be related information generated by a management plane network management system based on abnormal data reported by the UPF. Specifically, in a possible implementation, after collecting abnormal data detected in a time period, the UPF reports the abnormal data to the management plane network management system. In another optional implementation, the UPF reports detected abnormal data to the management plane network management system in real time. Alternatively, the UPF determines, based on an online AI identification mode and user plane real-time information, whether an exception exists. The user plane real-time information includes but is not limited to a traffic behavior mode, a packet length, packet header information, or information indicating that a massive number of connections point to a same address. After receiving the abnormal data, the management plane network management system performs statistical analytics on the abnormal data and generates the user plane exception information. The management plane network management system may send the user plane exception information to the SMF or the trusted control node. The user plane exception information is for updating the trusted policy information.

The SMF may generate the trusted policy information based on the user plane exception information, or may update locally stored trusted policy information based on the user plane exception information. The SMF may generate the trusted policy information based on the user plane exception information that is from the UPF. This improves implementation flexibility of the solution.

According to a second aspect, an embodiment of this application provides a trusted communication method, including:
receiving, by an access and mobility management function AMF, a non-access stratum NAS message;
obtaining, by the AMF, trusted policy information;
detecting, by the AMF based on the trusted policy information, whether the NAS message is abnormal; and
if the NAS message is abnormal, notifying and/or blocking, by the AMF, the NAS message, and/or reporting abnormal signaling to a trusted control node, where the abnormal signaling includes all or a part of the NAS message.

In this embodiment of this application, similar to the first aspect, the AMF may detect, based on the trusted policy information, whether the NAS message that passes through the AMF is abnormal. When it is detected that the NAS message is abnormal, the NAS message may be notified and/or blocked, and the abnormal signaling is reported to the trusted control node. In this way, the trusted control node can update the trusted policy information in a timely manner. This effectively improves security of the communication system.

With reference to the second aspect, in an optional implementation of the second aspect, the obtaining, by the AMF, trusted policy information includes:
obtaining, by the AMF, the trusted policy information from the trusted control node, where the trusted control node includes at least one of a policy control function PCF, a unified data management UDM, a network data analytics function NWDAF, or an independent network function entity.

In this embodiment of this application, the trusted control node may be an independent network function node, or may be integrated with at least one of the PCF, the UDM, or the NWDAF. The AMF may obtain the trusted policy information through a plurality of different network function nodes (the PCF, the UDM, or the NWDAF integrated with the trusted control node). This improves implementation flexibility of the solution.

With reference to the second aspect, in an optional implementation of the second aspect, the obtaining, by the AMF, trusted policy information includes:
receiving, by the AMF, the abnormal signaling sent by a session management function SMF; and
generating, by the AMF, the trusted policy information based on the abnormal signaling.

In this embodiment of this application, the AMF may generate the trusted policy information based on the abnormal signaling from the SMF, or may update locally stored trusted policy information based on the abnormal signaling. The AMF may generate the trusted policy information based on the abnormal signaling from the SMF. This improves implementation flexibility of the solution.

With reference to the second aspect, in an optional implementation of the second aspect, the reporting, by the AMF, abnormal signaling to a trusted control node includes:
sending, by the AMF, the abnormal signaling to the NWDAF; and
reporting, by the NWDAF, the abnormal signaling to the trusted control node.

In this embodiment of this application, when the trusted control node and the NWDAF are independent of each other, the AMF may report the abnormal signaling to the trusted control node through the NWDAF. In this way, the trusted control node can update the trusted policy information in a timely manner. This effectively improves security of the communication system.

According to a third aspect, an embodiment of this application provides a trusted communication method, including:
receiving, by a user plane function UPF, user data;
obtaining, by the UPF, trusted policy information;
detecting, by the UPF based on the trusted policy information, whether the user data is abnormal; and
if the user data is abnormal, notifying and/or blocking, by the UPF, a service corresponding to the user data; reporting abnormal data to the trusted control node; reporting the abnormal data to a management plane network management system, where the abnormal data includes the user data; and/or reporting the abnormal data to a session management function SMF, where the abnormal data includes the user data.

In this embodiment of this application, similar to the first aspect or the second aspect, the UPF may detect, based on the trusted policy information, whether the user data that passes through the UPF is abnormal. When it is detected that the user data is abnormal, the service corresponding to the user data may be notified and/or blocked, and the abnormal data is reported to the trusted control node. In this way, the trusted control node can update the trusted policy information in a timely manner. This effectively improves security of the communication system.

With reference to the third aspect, in an optional implementation of the third aspect, the obtaining, by the UPF, trusted policy information includes:
obtaining, by the UPF, the trusted policy information from the trusted control node, where the trusted control node includes at least one of a policy control function PCF, a unified data management UDM, a network data analytics function NWDAF, or an independent network function entity.

In this embodiment of this application, the trusted control node may be an independent network function node, or may be integrated with at least one of the PCF, the UDM, or the NWDAF. The UPF may obtain the trusted policy information through a plurality of different network function nodes (the PCF, the UDM, or the NWDAF integrated with the trusted control node). This improves implementation flexibility of the solution.

With reference to the third aspect, in an optional implementation of the third aspect, the method further includes:
receiving, by the UPF, user plane exception information sent by the management plane network management system and/or the SMF, where the user plane exception information is generated by the management plane network management system and/or the SMF based on the abnormal data; and
generating, by the UPF, the trusted policy information based on the user plane exception information.

In this embodiment of this application, the UPF receives the user plane exception information sent by the management plane network management system, and/or the UPF receives the user plane exception information sent by the SMF.

The UPF detects the received user data based on the trusted policy information; and when the user data is abnormal, the UPF generates the user plane exception information based on the abnormal data. Alternatively, the user plane exception information may be related information generated by the SMF based on abnormal signaling. Alternatively, the user plane exception information may be related information generated by the management plane network management system based on the abnormal data reported by the UPF. Specifically, in a possible implementation, after collecting abnormal data detected in a time period, the UPF reports the abnormal data to the management plane network management system. In another optional implementation, the UPF reports detected abnormal data to the management plane network management system in real time. A detection method may include an AI technology. After receiving the abnormal data, the management plane network management system performs statistical analytics on the abnormal data and generates the user plane exception information. The management plane network management system may send the user plane exception information to the SMF or the trusted control node. The user plane exception information is for updating the trusted policy information.

The UPF may generate the trusted policy information based on the user plane exception information, or may update locally stored trusted policy information based on the user plane exception information. The UPF may generate the trusted policy information based on the user plane exception information. This improves implementation flexibility of the solution.

With reference to the third aspect, in an optional implementation of the third aspect, the reporting, by the UPF, abnormal signaling to the trusted control node includes:
sending, by the UPF, the abnormal data to the NWDAF; and
reporting, by the NWDAF, the abnormal data to the trusted control node.

In this embodiment of this application, when the trusted control node and the NWDAF are independent of each other, the UPF may report the abnormal signaling to the trusted control node through the NWDAF. In this way, the trusted control node can update the trusted policy information in a timely manner. This effectively improves security of the communication system.

According to a fourth aspect, an embodiment of this application provides a trusted communication method, including:
receiving, by a session management function SMF, information about an abnormal base station;
obtaining, by the SMF, trusted policy information;
determining, by the SMF, a first user plane function UPF based on the trusted policy information, where a protection capability of the first UPF is higher than that of a second UPF, and the second UPF is configured to currently process data of the abnormal base station.

Specifically, first, the second UPF detects, based on the trusted policy information, whether the base station is abnormal. For example, when it is detected that a quantity of pieces of abnormal signaling and/or an amount of abnormal data of the base station in a statistical time period is greater than a threshold, the base station is determined as an abnormal base station. For example, within 24 hours, when an accumulated quantity of pieces of abnormal signaling of a base station is greater than 30, the base station is determined as an abnormal base station.

Next, the second UPF sends the information about the abnormal base station to a trusted control node. For example, the information about the abnormal base station is an Internet Protocol IP address of the abnormal base station.

Then, the SMF receives the information about the abnormal base station. The SMF obtains the trusted policy information. When the SMF determines that there is an abnormal base station, the SMF determines the first UPF, where the protection capability (or referred to as security performance) of the first UPF is higher than that of the second UPF, and uses the first UPF to process related data of the abnormal base station. In addition, the SMF deletes data of the second UPF, including but not limited to that, the SMF releases a resource on the second UPF.

Specifically, the SMF may select a UPF with a high protection capability as the first UPF through a network repository function NRF or a network slice selection function NSSF. The NRF or the NSSF stores a trustworthiness level (or protection capability) of each UPF.

In this embodiment of this application, the core network device (SMF) may determine whether a base station is abnormal. When the base station is an abnormal base station, the SMF determines the first UPF with a higher protection capability, and further processes related data of the base station through the UPF with the higher protection capability. This improves communication security.

With reference to the fourth aspect, in an optional implementation of the fourth aspect, after the SMF determines the first UPF based on the trusted policy information, the method further includes:
indicating, by the SMF, the first UPF to process the data of the abnormal base station; and
indicating, by the SMF, the second UPF to delete the data of the abnormal base station.

In this embodiment of this application, the SMF specifically indicates the first UPF with the higher trustworthiness level to process the data of the abnormal base station, and the SMF may further indicate the second UPF (an original UPF) to delete the data of the abnormal base station, so that the second UPF continues to process other data.

With reference to the fourth aspect, in an optional implementation of the fourth aspect, the receiving, by an SMF, information about a first abnormal base station includes:
receiving, by the SMF, information about the abnormal base station from at least one of an access and mobility management function AMF, a UPF, a network data analytics function NWDAF, or an independent network function entity.

In this embodiment of this application, the SMF may receive the information about the abnormal base station in a plurality of manners.

With reference to the fourth aspect, in an optional implementation of the fourth aspect, the obtaining, by the SMF, trusted policy information includes:
obtaining, by the SMF, the trusted policy information from the trusted control node, where the trusted control node includes at least one of a policy control function PCF, a unified data management UDM, the network data analytics function NWDAF, or the independent network function entity.

In this embodiment of this application, the trusted control node may be an independent network function node, or may be integrated with at least one of the PCF, the UDM, or the NWDAF. The SMF may obtain the trusted policy information through a plurality of different network function nodes (the PCF, the UDM, or the NWDAF integrated with the trusted control node). This improves implementation flexibility of the solution.

According to a fifth aspect, an embodiment of this application provides a trusted communication method, including:
obtaining, by a session management function SMF, trusted policy information;
receiving, by the SMF, information about abnormal user equipment or information about an abnormal home network, where the abnormal user equipment belongs to the abnormal home network; and
if a quantity of abnormal user equipments in the abnormal home network exceeds a first threshold,
determining, by the SMF, a first user plane function UPF based on the trusted policy information, where a protection capability of the first UPF is higher than that of a second UPF, and the second UPF is configured to currently process data of the abnormal home network.

In this embodiment of this application, first, the second UPF detects, based on the trusted policy information, whether each user equipment in the home network is abnormal. A detection manner includes but is not limited to: detecting data of the user equipment, detecting an access destination and a quantity of access times of the user equipment in a time period, detecting data traffic of the user equipment in a time period, and/or detecting a moving distance of the user equipment in a time period. For example, when a quantity of times that the user equipment accesses an unauthorized network slice in a time period reaches a threshold, the second UPF determines that the user equipment is abnormal user equipment.

A trusted control node (or the second UPF) counts a total quantity of abnormal user equipments on a home network corresponding to the abnormal user equipment information. When a quantity of abnormal user equipments in a statistical time period exceeds a first threshold, the trusted control node determines that the home network is an abnormal home network.

When the SMF determines that there is an abnormal home network, the SMF determines the first UPF, where the protection capability (or referred to as security performance) of the first UPF is higher than that of the second UPF, and processes related data of the abnormal home network through the first UPF. In addition, the SMF deletes data of the second UPF, including but not limited to that, the SMF releases a resource on the second UPF.

With reference to the fifth aspect, in an optional implementation of the fifth aspect, after the SMF determines the first UPF based on the trusted policy information, the method further includes:
indicating, by the SMF, the first UPF to process the data of the abnormal home network; and
indicating, by the SMF, the second UPF to delete the data of the abnormal home network.

In this embodiment of this application, a core network device (the SMF) may determine, based on the information about the abnormal user equipment or the information about the abnormal home network, whether the abnormal home network exists. When the abnormal home network exists, the SMF determines the first UPF with a higher protection capability, and further processes related data of the abnormal home network through the UPF with the higher protection capability. This improves communication security.

With reference to the fifth aspect, in an optional implementation of the fifth aspect, the receiving, by the SMF, information about abnormal user equipment or information about an abnormal home network includes:
receiving, by the SMF, the information about the abnormal user equipment or the information about the abnormal home network from at least one of an access and mobility management function AMF, the second UPF, a network data analytics function NWDAF, or an independent network function entity.

In this embodiment of this application, the SMF specifically indicates the first UPF with the higher protection capability to process the data of the abnormal home network, and the SMF may further indicate the second UPF (an original UPF) to delete the data of the abnormal home network, so that the second UPF continues to process other data.

With reference to the fifth aspect, in an optional implementation of the fifth aspect, the obtaining, by the SMF, trusted policy information includes:
obtaining, by the SMF, the trusted policy information from the trusted control node, where the trusted control node includes at least one of a policy control function PCF, a unified data management UDM, the network data analytics function NWDAF, or the independent network function entity.

In this embodiment of this application, the trusted control node may be an independent network function node, or may be integrated with at least one of the PCF, the UDM, or the NWDAF. The SMF may obtain the trusted policy information through a plurality of different network function nodes (the PCF, the UDM, or the NWDAF integrated with the trusted control node). This improves implementation flexibility of the solution.

According to a sixth aspect, an embodiment of this application provides a trusted communication method, including:
obtaining, by a trusted control node, trusted collected information from at least one of an access and mobility management function AMF, a session management function SMF, a user plane function UPF, a management plane network management system, a network exposure function NEF, a multi-access edge computing MEC, or an inter-public land mobile network user plane security function IPUPS;
determining, by the trusted control node, trusted policy information based on the trusted collected information; and
sending, by the trusted control node, the trusted policy information to at least one of the AMF, the SMF, the UPF, the management plane network management system, the NEF, the MEC, or the IPUPS.

In this embodiment of this application, the trusted control node may obtain trusted collected information of a plurality of network functions in a communication system, and generate trusted policy information based on the trusted collected information. Then, the trusted control node delivers the trusted policy information to the plurality of network functions, so that the network functions detect exchanged data and/or signaling based on the trusted policy information. This can effectively improve security of the communication system.

Specifically, the trusted control node receives, through the NEF, the trusted collected information sent by the MEC; and
the trusted control node sends the trusted policy information to the MEC through the NEF; and/or
the trusted control node receives, through the UPF, the trusted collected information sent by the MEC; and
the trusted control node sends the trusted policy information to the MEC through the UPF.

The trusted control node includes at least one of a policy control function PCF, a unified data management UDM, or a network data analytics function NWDAF.

With reference to the sixth aspect, in an optional implementation of the sixth aspect, the method further includes:
determining, by the trusted control node, an abnormal serving network based on the trusted policy information or based on the trusted policy information and the trusted collected information; and
sending, by the trusted control node, an identifier of the abnormal serving network to the PCF or the UDM, so that the PCF or the UDM updates a priority of the identifier of the abnormal serving network in a network selection policy, and sends the network selection policy to a terminal device; and/or
determining, by the trusted control node, an abnormal network slice based on the trusted policy information or based on the trusted policy information and the trusted collected information; and
sending, by the trusted control node, an identifier of the abnormal network slice to a network slice selection function NSSF, so that the NSSF updates a priority of the identifier of the abnormal network slice in a slice selection policy, and/or notifying, by the trusted control node, the access and mobility management function AMF and/or the session management function SMF to select another network slice with a stronger protection capability; and/or
determining, by the trusted control node, an abnormal node based on the trusted policy information or based on the trusted policy information and the trusted collected information; and
sending, by the trusted control node, an identifier of the abnormal node to at least one of a network repository function NRF, a domain name server (Domain Name Server, DNS), the SMF, a network slice subnet management function (Network Slice Subnet Management Function, NSSMF), or another network function, so that at least one of the NRF, the DNS, the SMF, the NSSMF, or the another network function selects a node (the node is, for example, an AMF or the UPF) with a stronger protection capability; and/or notifying, by the trusted control node, another network function to select a node with a stronger protection capability (for example, notifying the SMF to select a UPF with a stronger protection capability). For example, the trusted control node sends, to the NRF, that a UPF 1 is an abnormal node. After the NRF updates a configuration (for example, lowers a priority of the UPF 1), the NRF notifies the SMF to select a UPF 2 with a stronger protection capability.

The following uses an example in which the trusted control node updates the network selection policy for description.

Specifically, the trusted control node determines the abnormal serving network based on the trusted policy information or based on the trusted policy information and the trusted collected information. The abnormal serving network is a serving network in which a quantity of abnormal users is greater than a threshold. For example, when a quantity of abnormal users served by a serving network is greater than M (M is a positive integer) in a statistical time period, the trusted control node determines that the serving network is an abnormal serving network. Alternatively, when the trusted control node detects that a traffic level of a serving network in a statistical time period significantly exceeds a historical level by 100 times, the trusted control node determines that the serving network is an abnormal serving network or determines that a network slice is abnormal.

After determining the abnormal serving network, the trusted control node records an abnormal network slice or records an identifier of the abnormal serving network, where in a roaming access scenario, the identifier of the abnormal serving network may be a serving-public land mobile network identifier (serving plmn ID); and then updates the network selection policy based on the identifier of the abnormal serving network.

Optionally, the network selection policy includes identifiers of one or more abnormal serving networks, and the identifier of the abnormal serving network recorded in the network selection policy is on a blacklist.

Optionally, the network selection policy includes identifiers of one or more abnormal serving networks, and the identifier of the abnormal serving network recorded in the network selection policy is of a low priority.

After receiving the network selection policy, the terminal device updates a locally stored network selection policy. The another serving network is selected based on the network selection policy, so that the terminal device does not select an abnormal serving network. This improves communication security of the terminal device.

When it is determined that a slice is abnormal, an operator is notified to generate a new normal slice or enable another normal serving slice.

According to a seventh aspect, an embodiment of this application provides a trusted communication method, including:
receiving, by a core network device, a non-access stratum NAS message and/or user data, where the core network device may include an NEF, a DNS, an NWDAF, a UDM, a PCF, an AMF, an SMF, or the like, and may further include a network function node such as a network slice selection function (network slice selection function, NSSF);
obtaining, by the core network device, trusted policy information;
detecting, by the core network device based on the trusted policy information, whether the NAS message and/or the user data is abnormal; and
if the NAS message and/or the user data is abnormal, notifying and/or blocking, by the core network device, the NAS message and/or a service corresponding to the user data.

In this embodiment of this application, information collected by a trusted control node from each network function (and further including a radio access network device RAN, a terminal device UE, an inter-public land mobile communication network user plane security function IPUPS, and/or a mobile edge computing MEC) is referred to as trusted collected information. The trusted collected information includes but is not limited to: a globally unique temporary UE identity (Globally Unique Temporary UE Identity, GUTI), a subscription concealed identifier (Subscription Concealed Identifier, SUCI), a subscription permanent identifier (Subscription Permanent Identifier, SUPI), a quality of service (Quality of Service, QoS) parameter, a UE Internet Protocol address (UE Internet Protocol Address), an AMF identifier (AMF ID), a PCF identifier (PCF ID), a protocol data unit session identifier (PDU Session ID), core network tunnel information (CN tunnel info), and/or access network tunnel information (AN tunnel info). The trusted collected information may alternatively be a data throughput of the terminal device and/or positioning information of the terminal device, or information required for exception determining.

After collecting the trusted collected information, the trusted control node generates the trusted policy information based on the trusted collected information. The trusted policy information is for detecting whether signaling and/or user data exchanged in a communication system is secure and reliable. For example, when a location of the terminal device moves for a long distance in a short time period, it is determined that the terminal device is abnormal. For example, when the data throughput of the terminal device is large in a specified time period, it is determined that the terminal device is abnormal. For example, the terminal device is an Internet of Things device (for example, a water meter), and the trusted control node determines, based on the collected trusted policy information, that the water meter uploads data on the first day of each month. When the water meter uploads a large amount of data in another time period, the trusted control node determines that the water meter is abnormal. When the terminal device sends a large quantity of access requests to an unauthorized slice in a specific time period, the trusted control node determines that the terminal device is abnormal.

In this embodiment of this application, when the core network device is the SMF, the SMF may detect, based on the trusted policy information, whether the NAS message that passes through the SMF is abnormal. When it is detected that the NAS message is abnormal, the NAS message may be notified and/or blocked, and abnormal signaling is reported to the trusted control node (and/or the AMF). In this way, the trusted control node can update the trusted policy information in a timely manner. This effectively improves security of the communication system. When the core network device is the AMF, the AMF may detect, based on the trusted policy information, whether the NAS message that passes through the AMF is abnormal. When it is detected that the NAS message is abnormal, the NAS message may be notified and/or blocked, and abnormal signaling is reported to the trusted control node. In this way, the trusted control node can update the trusted policy information in a timely manner. This effectively improves security of the communication system. When the core network device is a UPF, the UPF may detect, based on the trusted policy information, whether the user data that passes through the UPF is abnormal. When it is detected that the user data is abnormal, the service corresponding to the user data may be notified and/or blocked, and abnormal data is reported to the trusted control node. In this way, the trusted control node can update the trusted policy information in a timely manner. This effectively improves security of the communication system.

With reference to the seventh aspect, in an optional implementation of the seventh aspect, the method further includes:
recording, by the core network device, abnormal signaling and/or abnormal data, where the abnormal signaling includes all or a part of the NAS message.

With reference to the seventh aspect, in an optional implementation of the seventh aspect, the receiving, by a core network device, a non-access stratum NAS message and/or user data includes:
receiving, by the session management function SMF, the non-access stratum NAS message;
receiving, by the access and mobility management function AMF, the NAS message; and/or
receiving, by a user plane function UPF, the user data.

With reference to the seventh aspect, in an optional implementation of the seventh aspect, the obtaining, by the core network device, trusted policy information includes:
obtaining, by the core network device, the trusted policy information from the trusted control node, where the trusted control node includes at least one of the policy control function PCF, the unified data management UDM, the network data analytics function NWDAF, or an independent network function entity.

With reference to the seventh aspect, in an optional implementation of the seventh aspect, the obtaining, by the core network device, trusted policy information includes:
receiving, by the session management function SMF, user plane exception information sent by the user plane function UPF, where the user plane exception information is generated by the UPF based on abnormal data; and
generating, by the SMF, the trusted policy information based on the user plane exception information; and/or
receiving, by the access and mobility management function AMF, the abnormal signaling sent by the SMF; and
generating, by the AMF, the trusted policy information based on the abnormal signaling; and/or
receiving, by the UPF, the user plane exception information sent by a management plane network management system; and
generating, by the UPF, the trusted policy information based on the user plane exception information.

According to an eighth aspect, an embodiment of this application provides a communication apparatus, including:
a transceiver, configured to receive a non-access stratum NAS message, where
the transceiver is further configured to obtain trusted policy information; and
a processor, configured to detect, based on the trusted policy information, whether the NAS message is abnormal.

If the NAS message is abnormal,
the processor is further configured to notify and/or block the NAS message;
the transceiver is further configured to report abnormal signaling to a trusted control node; and/or
the transceiver is further configured to report the abnormal signaling to an access and mobility management function AMF, where the abnormal signaling includes all or a part of the NAS message.

With reference to the eighth aspect, in a possible implementation of the eighth aspect,
the transceiver is specifically configured to obtain the trusted policy information from the trusted control node, where the trusted control node includes at least one of a policy control function PCF, a unified data management UDM, a network data analytics function NWDAF, or an independent network function entity.

With reference to the eighth aspect, in a possible implementation of the eighth aspect,
the transceiver is specifically configured to receive user plane exception information sent by a user plane function UPF; and
the processor is specifically configured to generate the trusted policy information based on the user plane exception information.

According to a ninth aspect, an embodiment of this application provides a communication apparatus, including:
a transceiver, configured to receive a non-access stratum NAS message, where
the transceiver is further configured to obtain trusted policy information; and
a processor, configured to detect, based on the trusted policy information, whether the NAS message is abnormal.

If the NAS message is abnormal,
the processor is further configured to notify and/or block the NAS message; and/or
the transceiver is further configured to report abnormal signaling to the trusted control node, where the abnormal signaling includes all or a part of the NAS message.

With reference to the ninth aspect, in a possible implementation of the ninth aspect,
the transceiver is specifically configured to obtain the trusted policy information from the trusted control node, where the trusted control node includes at least one of a policy control function PCF, a unified data management UDM, a network data analytics function NWDAF, or an independent network function entity.

With reference to the ninth aspect, in a possible implementation of the ninth aspect,
the transceiver is specifically configured to receive the abnormal signaling sent by a session management function SMF; and
the transceiver is specifically configured to generate the trusted policy information based on the abnormal signaling.

With reference to the ninth aspect, in a possible implementation of the ninth aspect,
the transceiver is specifically configured to send the abnormal signaling to the NWDAF; and
the transceiver is specifically configured to report the abnormal signaling to the trusted control node.

According to a tenth aspect, an embodiment of this application provides a communication apparatus, including:
a transceiver, configured to receive user data, where
the transceiver is further configured to obtain trusted policy information; and
a processor, configured to detect, based on the trusted policy information, whether the user data is abnormal.

If the user data is abnormal,
the processor is further configured to notify and/or block a service corresponding to the user data;
the transceiver is further configured to report abnormal data to a trusted control node;
the transceiver is further configured to report the abnormal data to a management plane network management system, where the abnormal data includes the user data; and/or
the transceiver is further configured to report the abnormal data to a session management function SMF, where the abnormal data includes the user data.

With reference to the tenth aspect, in a possible implementation of the tenth aspect,
the transceiver is specifically configured to obtain the trusted policy information from the trusted control node, where the trusted control node includes at least one of a policy control function PCF, a unified data management UDM, a network data analytics function NWDAF, or an independent network function entity.

With reference to the tenth aspect, in a possible implementation of the tenth aspect,
the transceiver is further configured to receive user plane exception information sent by the management plane network management system and/or the SMF, where the user plane exception information is generated by the management plane network management system and/or the SMF based on the abnormal data; and
the processor is further configured to generate the trusted policy information based on the user plane exception information.

With reference to the tenth aspect, in a possible implementation of the tenth aspect,
the transceiver is further configured to send the abnormal data to the NWDAF; and
the transceiver is further configured to report the abnormal data to the trusted control node.

According to an eleventh aspect, an embodiment of this application provides a communication apparatus, including:
a transceiver, configured to receive information about an abnormal base station, where
the transceiver is further configured to obtain trusted policy information; and
a processor, configured to determine a first user plane function UPF based on the trusted policy information, where a protection capability of the first UPF is higher than that of a second UPF, and the second UPF is configured to currently process data of the abnormal base station.

With reference to the eleventh aspect, in a possible implementation of the eleventh aspect,
the transceiver is further configured to indicate the first UPF to process the data of the abnormal base station; and
the transceiver is further configured to indicate the second UPF to delete the data of the abnormal base station.

With reference to the eleventh aspect, in a possible implementation of the eleventh aspect,
the transceiver is specifically configured to receive the information about the abnormal base station from at least one of an access and mobility management function AMF, a UPF, or a network data analytics function NWDAF.

With reference to the eleventh aspect, in a possible implementation of the eleventh aspect,
the transceiver is further configured to obtain the trusted policy information from a trusted control node, where the trusted control node includes at least one of a policy control function PCF, a unified data management UDM, the network data analytics function NWDAF, or an independent network function entity.

According to a twelfth aspect, an embodiment of this application provides a communication apparatus, including:
a transceiver, configured to obtain trusted policy information, where
the transceiver is further configured to receive information about abnormal user equipment or information about an abnormal home network, where the abnormal user equipment belongs to the abnormal home network; and
a processor, configured to: if a quantity of abnormal user equipments in the abnormal home network exceeds a first threshold,
determine a first user plane function UPF based on the trusted policy information, where a protection capability of the first UPF is higher than that of a second UPF, and the second UPF is configured to currently process data of the abnormal home network.

With reference to the twelfth aspect, in a possible implementation of the twelfth aspect,
the transceiver is further configured to indicate the first UPF to process the data of the abnormal home network; and
the transceiver is further configured to indicate the second UPF to delete the data of the abnormal home network.

With reference to the twelfth aspect, in a possible implementation of the twelfth aspect,
the transceiver is further configured to receive the information about the abnormal user equipment or the information about the abnormal home network from at least one of an access and mobility management function AMF, the second UPF, a network data analytics function NWDAF, or an independent network function entity.

With reference to the twelfth aspect, in a possible implementation of the twelfth aspect,
the transceiver is further configured to obtain the trusted policy information from a trusted control node, where the trusted control node includes at least one of a policy control function PCF, a unified data management UDM, the network data analytics function NWDAF, or the independent network function entity.

According to a thirteenth aspect, an embodiment of this application provides a communications apparatus, including:
a transceiver, configured to obtain trusted collected information from at least one of a policy control function PCF, an access and mobility management function AMF, a session management function SMF, a user plane function UPF, a management plane network management system, a network exposure function NEF, a multi-access edge computing MEC, or an inter-public land mobile network user plane security function IPUPS; and
a processor, configured to determine trusted policy information based on the trusted collected information.

The transceiver is further configured to send the trusted policy information to at least one of the AMF, the SMF, the UPF, the management plane network management system, the NEF, the MEC, or the IPUPS.

With reference to the thirteenth aspect, in a possible implementation of the thirteenth aspect,
the transceiver is further configured to receive, through the NEF, the trusted collected information sent by the MEC; and
the transceiver is further configured to send the trusted policy information to the MEC through the NEF; and/or
the transceiver is further configured to receive, through the UPF, the trusted collected information sent by the MEC; and
the transceiver is further configured to send the trusted policy information to the MEC through the UPF.

With reference to the thirteenth aspect, in a possible implementation of the thirteenth aspect,
the trusted control node includes at least one of a policy control function PCF, a unified data management UDM, or a network data analytics function NWDAF.

With reference to the thirteenth aspect, in a possible implementation of the thirteenth aspect,
the processor is further configured to determine an abnormal serving network based on the trusted policy information or based on the trusted policy information and the trusted collected information; and
the transceiver is further configured to send an identifier of the abnormal serving network or an identifier of an abnormal network slice to the policy control function PCF or the unified data management UDM, so that the PCF or the UDM updates a priority of the identifier of the abnormal serving network or the network slice in a network selection policy, and sends the network selection policy to a terminal device; and/or
the processor is further configured to determine an abnormal network slice based on the trusted policy information or based on the trusted policy information and the trusted collected information; and
the transceiver is further configured to send an identifier of the abnormal network slice to a network slice selection function NSSF, so that the NSSF updates a priority of the identifier of the abnormal network slice in a slice selection policy, and/or the transceiver is further configured to notify the access and mobility management function AMF and/or the session management function SMF to select another network slice with a stronger protection capability; and/or
the processor is further configured to determine an abnormal node based on the trusted policy information or based on the trusted policy information and the trusted collected information; and
the transceiver is further configured to send an identifier of the abnormal node to at least one of a network repository function NRF, a domain name server (Domain Name Server, DNS), the SMF, a network slice subnet management function (Network Slice Subnet Management Function, NSSMF), or another network function, so that at least one of the NRF, the DNS, the SMF, the NSSMF, or the another network function selects a node with a stronger protection capability, and/or the transceiver is further configured to notify another network function to select a node with a stronger protection capability (for example, notify the SMF to select a UPF with a stronger protection capability).

According to a fourteenth aspect, an embodiment of this application provides a communication apparatus, including:
a transceiver module, configured to receive a non-access stratum NAS message, where
the transceiver module is further configured to obtain trusted policy information; and
a processing module, configured to detect, based on the trusted policy information, whether the NAS message is abnormal.

If the NAS message is abnormal,
the processing module is further configured to notify and/or block the NAS message;
the transceiver module is further configured to report abnormal signaling to a trusted control node; and/or
the transceiver module is further configured to report the abnormal signaling to an access and mobility management function AMF, where the abnormal signaling includes all or a part of the NAS message.

With reference to the fourteenth aspect, in a possible implementation of the fourteenth aspect,
the transceiver module is specifically configured to obtain the trusted policy information from the trusted control node, where the trusted control node includes at least one of a policy control function PCF, a unified data management UDM, or a network data analytics function NWDAF.

With reference to the fourteenth aspect, in a possible implementation of the fourteenth aspect,
the transceiver module is specifically configured to receive user plane exception information sent by a user plane function UPF; and
the processing module is specifically configured to generate the trusted policy information based on the user plane exception information.

According to a fifteenth aspect, an embodiment of this application provides a communication apparatus, including:
a transceiver module, configured to receive a non-access stratum NAS message, where
the transceiver module is further configured to obtain trusted policy information; and
a processing module, configured to detect, based on the trusted policy information, whether the NAS message is abnormal.

If the NAS message is abnormal,
the processing module is further configured to notify and/or block the NAS message; and/or
the transceiver module is further configured to report abnormal signaling to a trusted control node, where the abnormal signaling includes all or a part of the NAS message.

With reference to the fifteenth aspect, in a possible implementation of the fifteenth aspect,
the transceiver module is specifically configured to obtain the trusted policy information from the trusted control node, where the trusted control node includes at least one of a policy control function PCF, a unified data

management UDM, or a network data analytics function NWDAF.

With reference to the fifteenth aspect, in a possible implementation of the fifteenth aspect,
the transceiver module is specifically configured to receive the abnormal signaling sent by a session management function SMF; and
the transceiver module is specifically configured to generate the trusted policy information based on the abnormal signaling.

With reference to the fifteenth aspect, in a possible implementation of the fifteenth aspect,
the transceiver module is specifically configured to send the abnormal signaling to the NWDAF; and
the transceiver module is specifically configured to report the abnormal signaling to the trusted control node.

According to a sixteenth aspect, an embodiment of this application provides a communication apparatus, including:
a transceiver module, configured to receive user data, where
the transceiver module is further configured to obtain trusted policy information; and
a processing module, configured to detect, based on the trusted policy information, whether the user data is abnormal.

If the user data is abnormal,
the processing module is further configured to notify and/or block a service corresponding to the user data;
the transceiver module is further configured to report abnormal data to a trusted control node;
the transceiver module is further configured to report the abnormal data to a management plane network management system, where the abnormal data includes the user data; and/or
the transceiver module is further configured to report the abnormal data to a session management function SMF, where the abnormal data includes the user data.

With reference to the sixteenth aspect, in a possible implementation of the sixteenth aspect,
the transceiver module is specifically configured to obtain the trusted policy information from the trusted control node, where the trusted control node includes at least one of a policy control function PCF, a unified data management UDM, a network data analytics function NWDAF, or an independent network function entity.

With reference to the sixteenth aspect, in a possible implementation of the sixteenth aspect,
the transceiver module is further configured to receive user plane exception information sent by the management plane network management system and/or the SMF, where the user plane exception information is generated by the management plane network management system and/or the SMF based on the abnormal data; and
the processing module is further configured to generate the trusted policy information based on the user plane exception information.

With reference to the sixteenth aspect, in a possible implementation of the sixteenth aspect,
the transceiver module is further configured to send the abnormal data to the NWDAF; and
the transceiver module is further configured to report the abnormal data to the trusted control node.

According to a seventeenth aspect, an embodiment of this application provides a communication apparatus, including:
a transceiver module, configured to receive information about an abnormal base station, where
the transceiver module is further configured to obtain trusted policy information; and
a processing module, configured to determine a first user plane function UPF based on the trusted policy information, where a protection capability of the first UPF is higher than that of a second UPF, and the first UPF is configured to currently process data of the abnormal base station.

With reference to the seventeenth aspect, in a possible implementation of the seventeenth aspect,
the transceiver module is further configured to indicate the first UPF to process the data of the abnormal base station; and
the transceiver module is further configured to indicate the second UPF to delete the data of the abnormal base station.

With reference to the seventeenth aspect, in a possible implementation of the seventeenth aspect,
the transceiver module is specifically configured to receive the information about the abnormal base station from at least one of an access and mobility management function AMF, a UPF, or a network data analytics function NWDAF.

With reference to the seventeenth aspect, in a possible implementation of the seventeenth aspect,
the transceiver module is further configured to obtain the trusted policy information from a trusted control node, where the trusted control node includes at least one of a policy control function PCF, a unified data management UDM, the network data analytics function NWDAF, or an independent network function entity.

According to an eighteenth aspect, an embodiment of this application provides a communication apparatus, including:
a transceiver module, configured to obtain trusted policy information, where
the transceiver module is further configured to receive information about abnormal user equipment or information about an abnormal home network, where the abnormal user equipment belongs to the abnormal home network; and
a processing module, configured to: if a quantity of abnormal user equipments in the abnormal home network exceeds a first threshold,
determine a first user plane function UPF based on the trusted policy information, where a protection capability of the first UPF is higher than that of a second UPF, and the first UPF is configured to currently process data of the abnormal home network.

With reference to the eighteenth aspect, in a possible implementation of the eighteenth aspect,
the transceiver module is further configured to indicate the first UPF to process the data of the abnormal home network; and
the transceiver module is further configured to indicate the second UPF to delete the data of the abnormal home network.

With reference to the eighteenth aspect, in a possible implementation of the eighteenth aspect,
the transceiver module is further configured to receive the information about the abnormal user equipment or the information about the abnormal home network from at least one of an access and mobility management function AMF, the second UPF, or a network data analytics function NWDAF.

With reference to the eighteenth aspect, in a possible implementation of the eighteenth aspect, the transceiver module is further configured to obtain the trusted policy information from a trusted control node, where the trusted control node includes at least one of a policy control function PCF, a unified data management UDM, the network data analytics function NWDAF, or an independent network function entity.

According to a nineteenth aspect, an embodiment of this application provides a communication apparatus, including:
a transceiver module, configured to obtain trusted collected information from at least one of a policy control function PCF, an access and mobility management function AMF, a session management function SMF, a user plane function UPF, a management plane network management system, a network exposure function NEF, a multi-access edge computing MEC, or an inter-public land mobile network user plane security function IPUPS; and
a processing module, configured to determine trusted policy information based on the trusted collected information.

The transceiver module is further configured to send the trusted policy information to at least one of the AMF, the SMF, the UPF, the management plane network management system, the NEF, the MEC, or the IPUPS.

With reference to the nineteenth aspect, in a possible implementation of the nineteenth aspect,
the transceiver module is further configured to receive, through the NEF, the trusted collected information sent by the MEC; and
the transceiver module is further configured to send the trusted policy information to the MEC through the NEF; and/or
the transceiver module is further configured to receive, through the UPF, the trusted collected information sent by the MEC; and
the transceiver module is further configured to send the trusted policy information to the MEC through the UPF.

With reference to the nineteenth aspect, in a possible implementation of the nineteenth aspect, the trusted control node includes at least one of the policy control function PCF, a unified data management UDM, or a network data analytics function NWDAF.

With reference to the nineteenth aspect, in a possible implementation of the nineteenth aspect,
the processing module is further configured to determine an abnormal serving network based on the trusted policy information or based on the trusted policy information and the trusted collected information; and
the transceiver module is further configured to send an identifier of the abnormal serving network or an identifier of an abnormal network slice to the policy control function PCF or the unified data management UDM, so that the PCF or the UDM updates a priority of the identifier of the abnormal serving network and/or an identifier of an abnormal network slice in a network selection policy, and sends the network selection policy to a terminal device; and/or
the processing module is further configured to determine an abnormal network slice based on the trusted policy information or based on the trusted policy information and the trusted collected information; and
the transceiver module is further configured to send an identifier of the abnormal network slice to a network slice selection function NSSF, so that the NSSF updates a priority of the identifier of the abnormal network slice in a slice selection policy, and/or the transceiver module is further configured to notify the access and mobility management function AMF and/or the session management function SMF to select another network slice with a stronger protection capability; and/or
the processing module is further configured to determine an abnormal node based on the trusted policy information or based on the trusted policy information and the trusted collected information; and
the transceiver module is further configured to send an identifier of the abnormal node to at least one of a network repository function NRF, a domain name server (Domain Name Server, DNS), the SMF, a network slice subnet management function (Network Slice Subnet Management Function, NSSMF), or another network function, so that at least one of the NRF, the DNS, the SMF, the NSSMF, or the another network function selects a node with a stronger protection capability, and/or the transceiver module is further configured to notify another network function to select a node with a stronger protection capability (for example, notify the SMF to select a UPF with a stronger protection capability).

According to a twentieth aspect, an embodiment of this application provides a communication apparatus, including:
a transceiver module, configured to receive a non-access stratum NAS message and/or user data, where a core network device may include an NEF, a DNS, an NWDAF, a UDM, a PCF, an AMF, an SMF, or the like, and may further include a network function node such as a network slice selection function (network slice selection function, NSSF), where
the transceiver module is further configured to obtain trusted policy information; and
a processing module, configured to detect, based on the trusted policy information, whether the NAS message and/or the user data is abnormal.

If the NAS message and/or the user data is abnormal,
the processing module is further configured to notify and/or block the NAS message and/or a service corresponding to the user data.

With reference to the twentieth aspect, in an optional implementation of the twentieth aspect, the apparatus further includes:
the processing module is further configured to record abnormal signaling and/or abnormal data, where the abnormal signaling includes all or a part of the NAS message.

With reference to the twentieth aspect, in an optional implementation of the twentieth aspect, the receiving, by a core network device, a non-access stratum NAS message and/or user data includes:
the transceiver module is further configured to receive the non-access stratum NAS message;
the transceiver module is further configured to receive the NAS message; and/or
the transceiver module is further configured to receive the user data.

With reference to the twentieth aspect, in an optional implementation of the twentieth aspect, the obtaining, by the core network device, trusted policy information includes:
the transceiver module is further configured to obtain the trusted policy information from a trusted control node, where the trusted control node includes at least one of the policy control function PCF, the unified data management UDM, the network data analytics function NWDAF, or an independent network function entity.

With reference to the twentieth aspect, in an optional implementation of the twentieth aspect, the obtaining, by the core network device, trusted policy information includes:
the transceiver module is further configured to receive user plane exception information sent by a user plane function UPF, where the user plane exception information is generated by the UPF based on abnormal data; and
the processing module is further configured to generate the trusted policy information based on the user plane exception information; and/or
the transceiver module is further configured to receive the abnormal signaling sent by the SMF; and
the processing module is further configured to generate the trusted policy information based on the abnormal signaling; and/or
the transceiver module is further configured to receive user plane exception information sent by a management plane network management system; and
the processing module is further configured to generate the trusted policy information based on the user plane exception information.

According to a twenty-first aspect, an embodiment of this application provides a communication apparatus, including:
a transceiver, configured to receive a non-access stratum NAS message and/or user data, where a core network device may include an NEF, a DNS, an NWDAF, a UDM, a PCF, an AMF, an SMF, or the like, and may further include a network function node such as a network slice selection function (network slice selection function, NSSF), where
the transceiver is further configured to obtain trusted policy information; and
a processor, configured to detect, based on the trusted policy information, whether the NAS message and/or the user data is abnormal.

If the NAS message and/or the user data is abnormal,
the processor is further configured to notify and/or block the NAS message and/or a service corresponding to the user data.

With reference to the twenty-first aspect, in an optional implementation of the twenty-first aspect, the apparatus further includes:
the processor is further configured to record abnormal signaling and/or abnormal data, where the abnormal signaling includes all or a part of the NAS message.

With reference to the twenty-first aspect, in an optional implementation of the twenty-first aspect, the receiving, by a core network device, a non-access stratum NAS message and/or user data includes:
the transceiver is further configured to receive the non-access stratum NAS message;
the transceiver is further configured to receive the NAS message; and/or
the transceiver is further configured to receive the user data.

With reference to the twenty-first aspect, in an optional implementation of the twenty-first aspect, the obtaining, by the core network device, trusted policy information includes:
the transceiver is further configured to obtain the trusted policy information from a trusted control node, where the trusted control node includes at least one of the policy control function PCF, the unified data management UDM, the network data analytics function NWDAF, or an independent network function entity.

With reference to the twenty-first aspect, in an optional implementation of the twenty-first aspect, the obtaining, by the core network device, trusted policy information includes:
the transceiver is further configured to receive user plane exception information sent by a user plane function UPF, where the user plane exception information is generated by the UPF based on abnormal data; and
the processor is further configured to generate the trusted policy information based on the user plane exception information; and/or
the transceiver is further configured to receive the abnormal signaling sent by the SMF; and
the processor is further configured to generate the trusted policy information based on the abnormal signaling; and/or
the transceiver is further configured to receive user plane exception information sent by a management plane network management system; and
the processor is further configured to generate the trusted policy information based on the user plane exception information.

According to a twenty-second aspect, an embodiment of this application provides a communication apparatus. The communication apparatus may implement functions performed by the NWDAF, the UDM, the PCF, the AMF, the SMF, the UPF, the management plane network management system, the IPUPS, the UE, or the NEF in the method in the first, second, third, fourth, fifth, sixth, or seventh aspect. The communication apparatus includes a processor, a memory, a receiver connected to the processor, and a transmitter connected to the processor. The memory is configured to store program code, and transmit the program code to the processor. The processor is configured to drive, according to instructions in the program code, the receiver and the transmitter to perform the method according to the first, second, third, fourth, fifth, sixth, or seventh aspect. The receiver and the transmitter are separately connected to the processor, to perform operations performed by the NWDAF, the UDM, the PCF, the AMF, the SMF, the UPF, the management plane network management system, the IPUPS, the UE, or the NEF in the methods in the foregoing aspects. Specifically, the transmitter may perform a sending operation, and the receiver may perform a receiving operation.

According to a twenty-third aspect, an embodiment of this application provides a communication apparatus. The communication apparatus may include an entity such as a network device or a chip. The communication apparatus includes a processor and a memory. The memory is configured to store instructions, and the processor is configured to execute the instructions in the memory, so that the communication apparatus performs the method according to any one of the first, second, third, fourth, fifth, sixth, or seventh aspect.

According to a twenty-fourth aspect, an embodiment of this application provides a computer-readable storage medium storing one or more computer-executable instructions. When the computer-executable instructions are executed by a processor, the processor performs any one of the possible implementations of the first, second, third, fourth, fifth, sixth, or seventh aspect.

According to a twenty-fifth aspect, an embodiment of this application provides a computer program product (or referred to as a computer program) that stores one or more computer-executable instructions. When the computer-executable instructions are executed by a processor, the processor performs any one of the possible implementations of the first, second, third, fourth, fifth, sixth, or seventh aspect.

According to a twenty-sixth aspect, this application provides a chip system. The chip system includes a processor, configured to support a computer device in implementing functions in the foregoing aspects. In a possible design, the chip system further includes a memory. The memory is configured to store program instructions and data that are necessary for the computer device. The chip system may include a chip, or may include a chip and another discrete component.

According to a twenty-seventh aspect, this application provides a communication system. The communication system includes the communication apparatuses according to the eighth aspect to the thirteenth aspect or the twenty-first aspect.

### BRIEF DESCRIPTION OF DRAWINGS

FIG. 1 is a schematic diagram of a 5G communication system according to an embodiment of this application;
FIG. 2 is a schematic diagram of a hardware structure of a communication apparatus according to an embodiment of this application;
FIG. 3a-1 to FIG. 3a-3 are a schematic diagram of an embodiment of a trusted communication method according to an embodiment of this application;

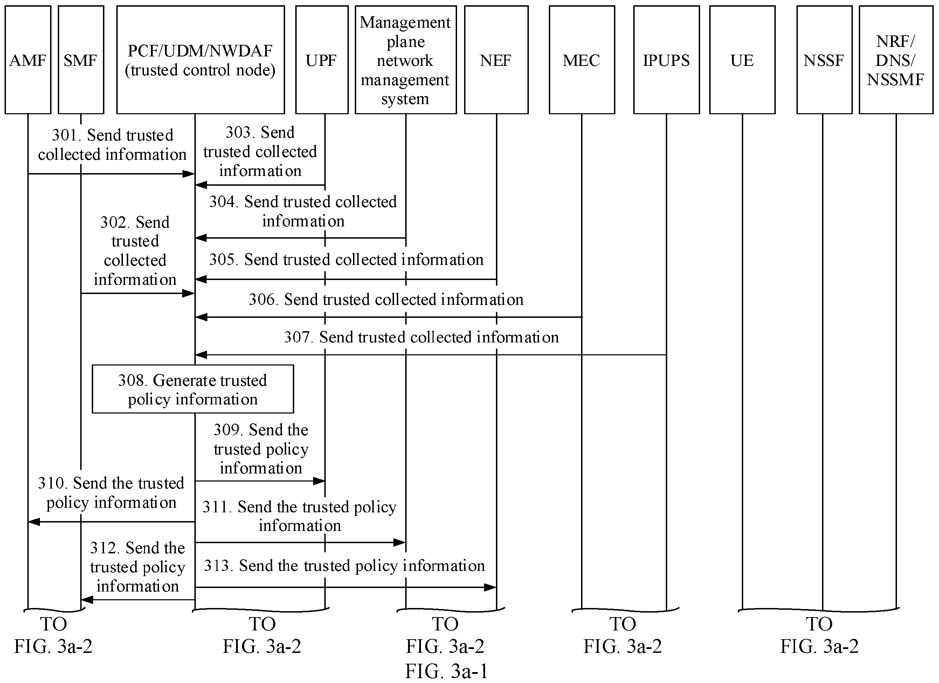

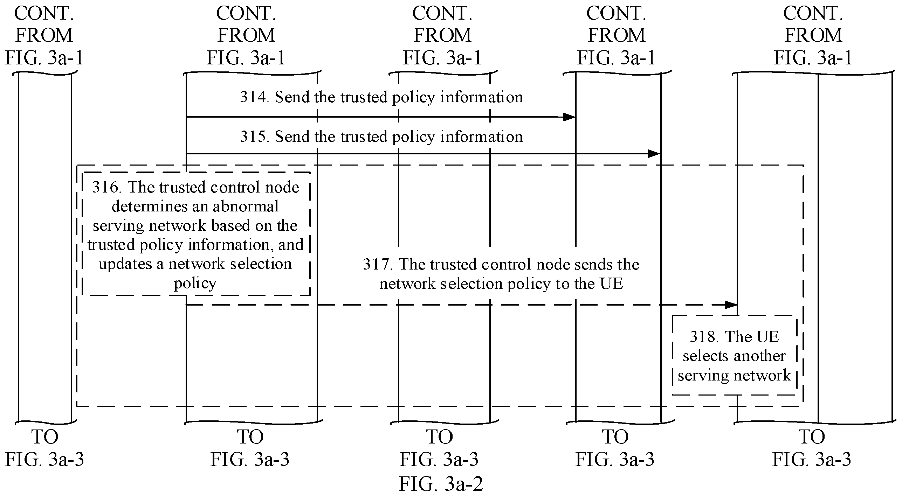

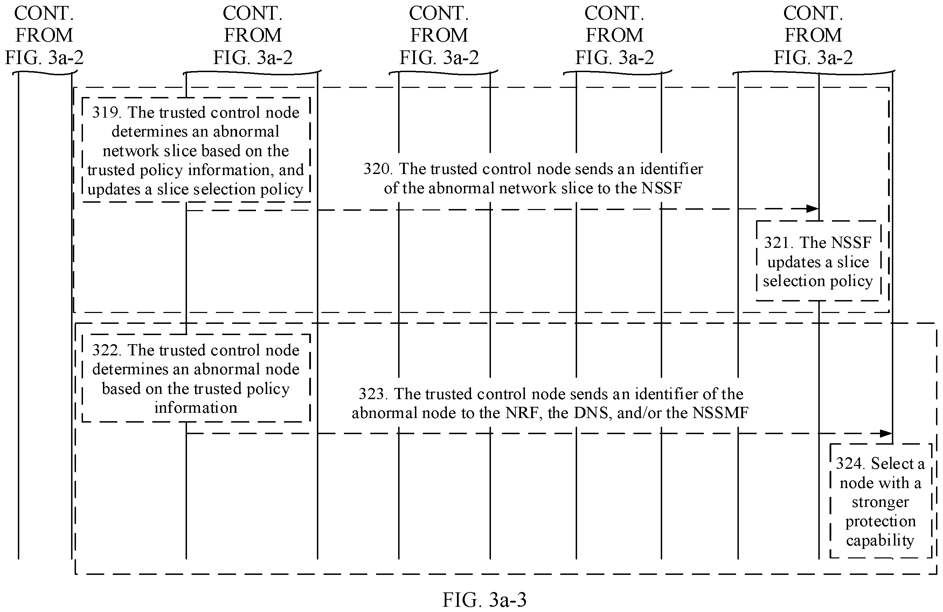

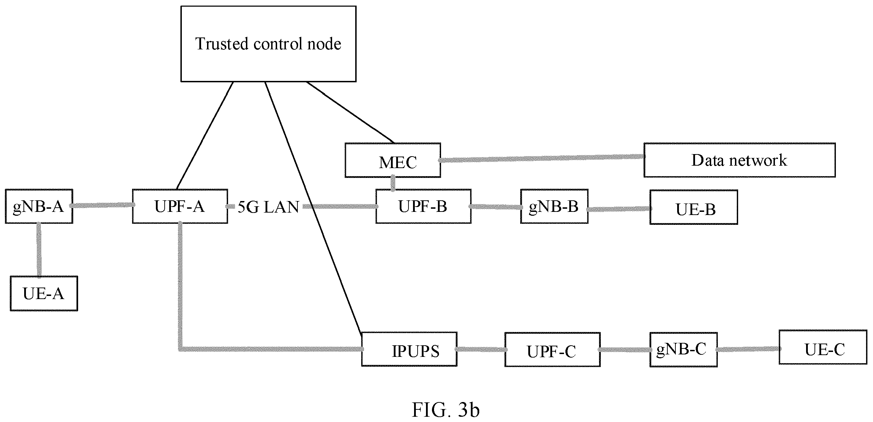

FIG. 3b is a schematic topology diagram of another communication system according to an embodiment of this application;

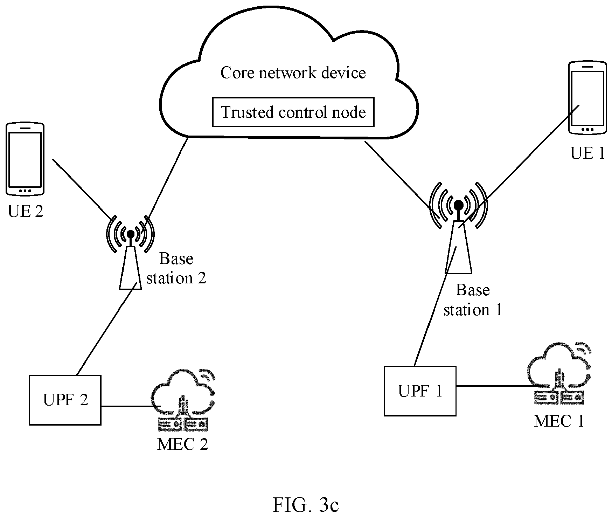

FIG. 3c is a schematic topology diagram of another communication system according to an embodiment of this application;

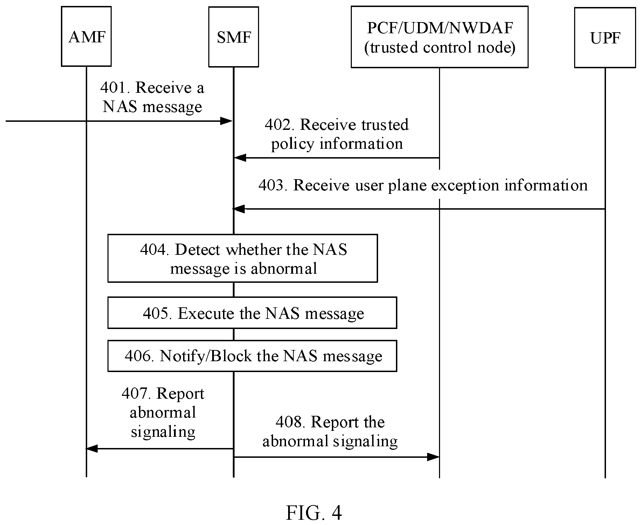

FIG. 4 is a schematic diagram of an embodiment of another trusted communication method according to an embodiment of this application;

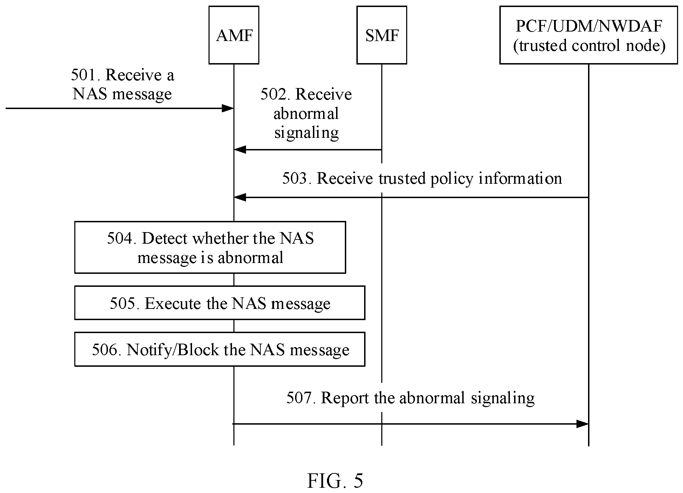

FIG. 5 is a schematic diagram of an embodiment of another trusted communication method according to an embodiment of this application;

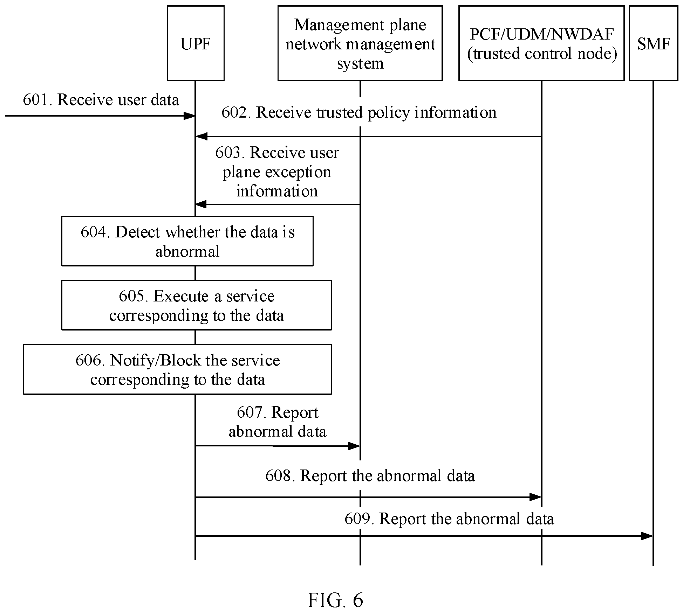

FIG. 6 is a schematic diagram of an embodiment of another trusted communication method according to an embodiment of this application;
FIG. 7a-1 and FIG. 7a-2 are a schematic diagram of an embodiment of another trusted communication method according to an embodiment of this application;

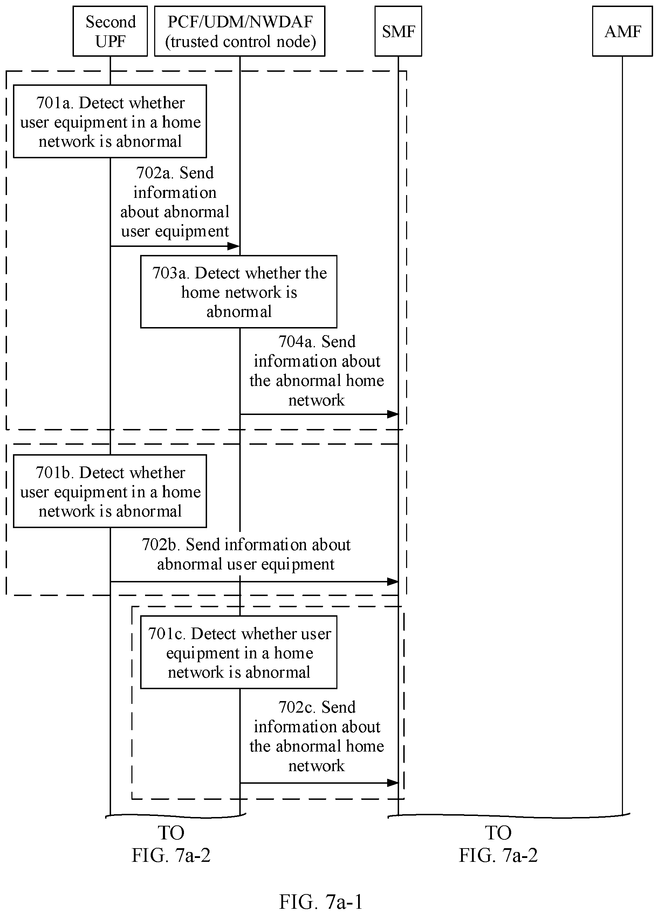

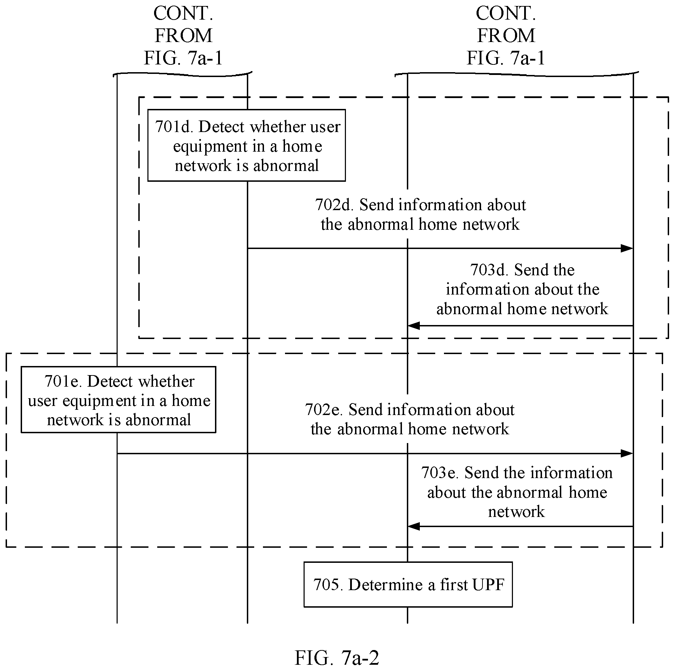

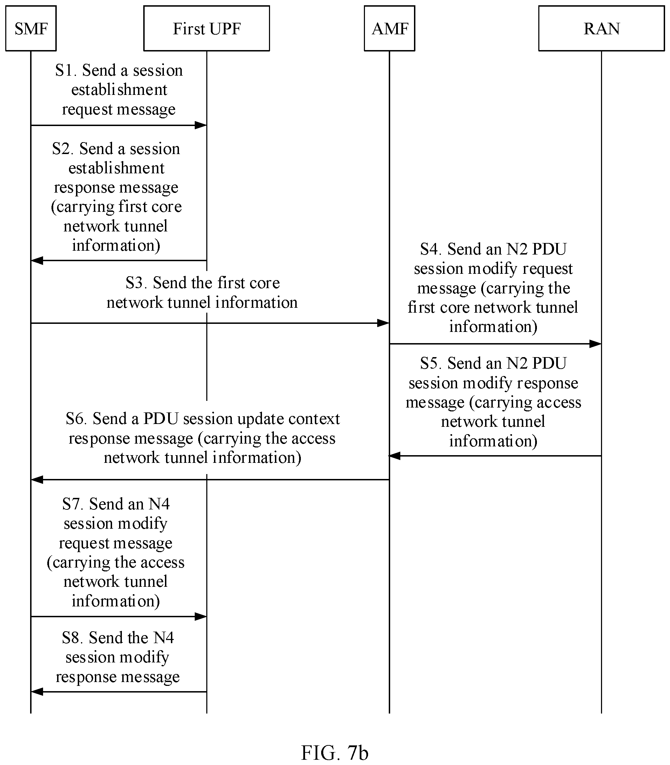

FIG. 7b is a schematic diagram of an embodiment of another trusted communication method according to an embodiment of this application;
FIG. 8a-1 and FIG. 8a-2 are a schematic diagram of an embodiment of another trusted communication method according to an embodiment of this application;

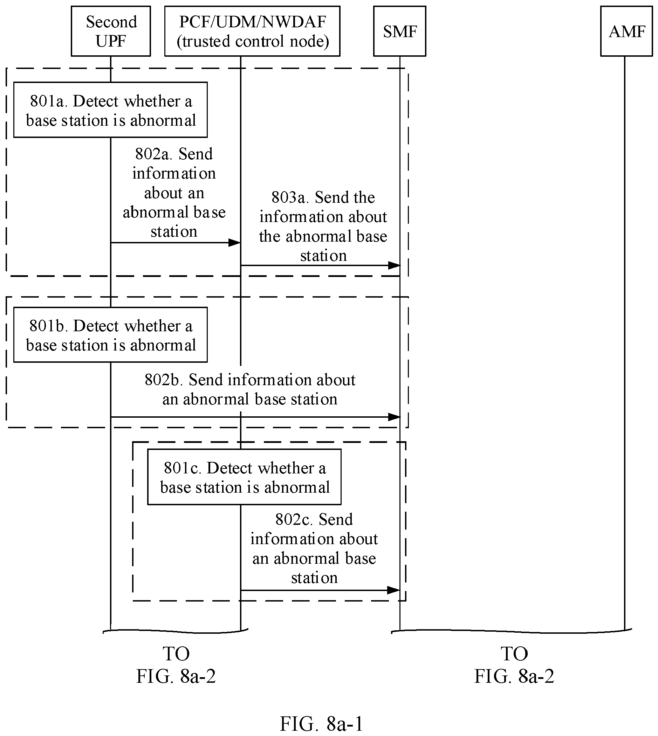

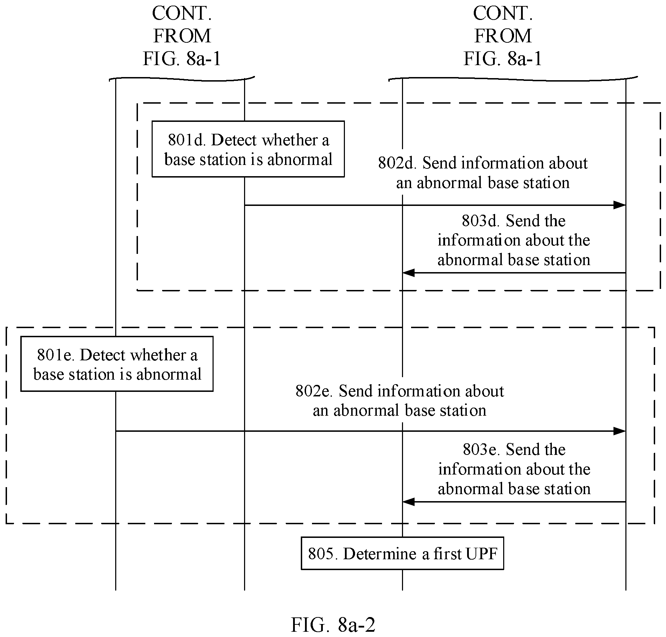

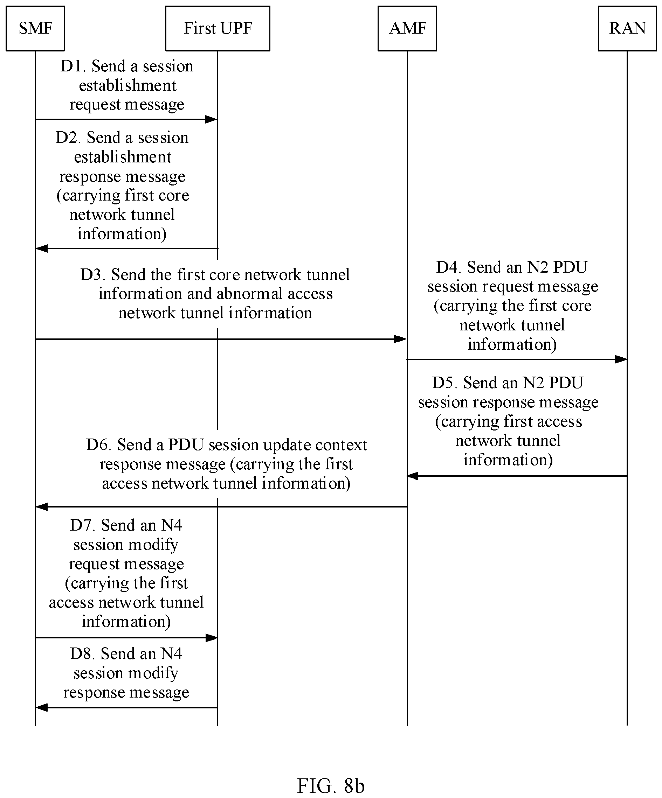

FIG. 8b is a schematic diagram of an embodiment of another trusted communication method according to an embodiment of this application;

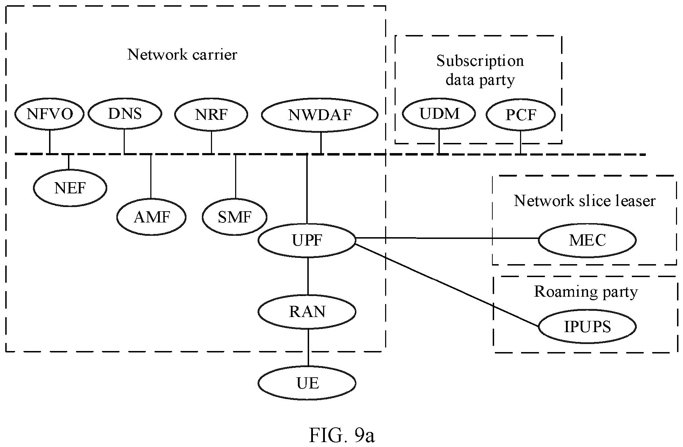

FIG. 9a is a schematic diagram of a network function system architecture in a conventional technology;

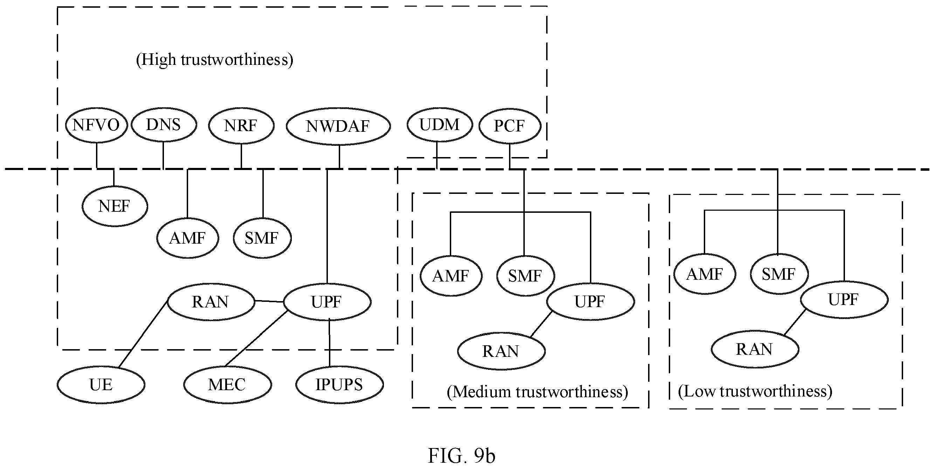

FIG. 9b is a schematic diagram of an architecture of a network function according to an embodiment of this application;

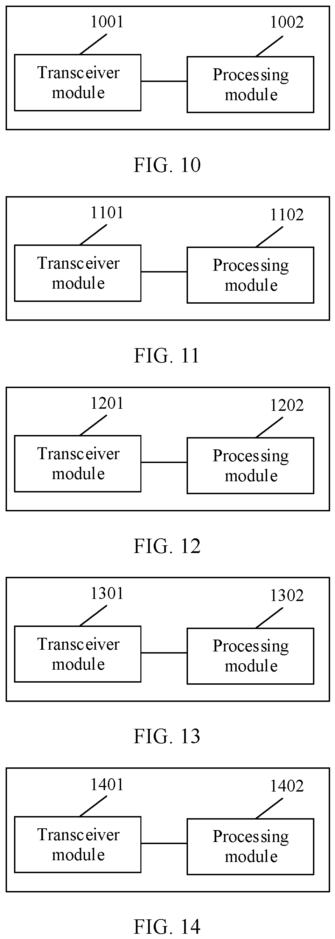

FIG. 10 is a schematic diagram of an embodiment of a communication apparatus according to an embodiment of this application;
FIG. 11 is a schematic diagram of an embodiment of a communication apparatus according to an embodiment of this application;
FIG. 12 is a schematic diagram of an embodiment of a communication apparatus according to an embodiment of this application;
FIG. 13 is a schematic diagram of an embodiment of a communication apparatus according to an embodiment of this application;
FIG. 14 is a schematic diagram of an embodiment of a communication apparatus according to an embodiment of this application;

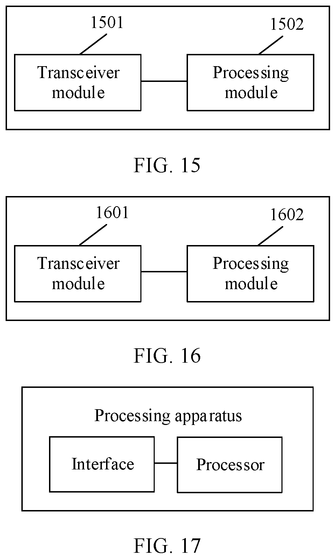

FIG. 15 is a schematic diagram of an embodiment of a communication apparatus according to an embodiment of this application;
FIG. 16 is a schematic diagram of an embodiment of a communication apparatus according to an embodiment of this application; and
FIG. 17 is a schematic diagram of a processing apparatus according to an embodiment of this application.

### DESCRIPTION OF EMBODIMENTS

Embodiments of this application provide a trusted communication method and a related apparatus. First, a core network device receives a non-access stratum NAS message and/or user data, and the core network device obtains trusted policy information. Next, the core network device detects, based on the trusted policy information, whether the NAS message and/or the user data is abnormal. If the NAS message and/or the user data is abnormal, an SMF notifies and/or blocks the NAS message and/or a service corresponding to the user data. The core network device detects the NAS message and/or the user data based on the trusted policy information. Regardless of whether data and signaling are from a same security zone, real-time monitoring on the data and the signaling improves communication security performance of a network device.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

The following clearly describes the technical solutions in embodiments of this application with reference to the accompanying drawings in embodiments of this application. In descriptions of this application, "/" means "or" unless otherwise specified. For example, A/B may represent A or B. In this application, "and/or" describes only an association relationship for describing associated objects and represents that three relationships may exist. For example, A and/or B may represent the following three cases: Only A exists, both A and B exist, and only B exists. In addition, in the descriptions of this application, "at least one item" means one or more items, and "a plurality of items" means two or more items. "At least one item (piece) of the following" or a similar expression thereof means any combination of these items, including a singular item (piece) or any combination of plural items (pieces). For example, at least one of a, b, or c may indicate: a; b; c; a and b; a and c; b and c; or a, b, and c; where a, b, and c may be singular or plural.

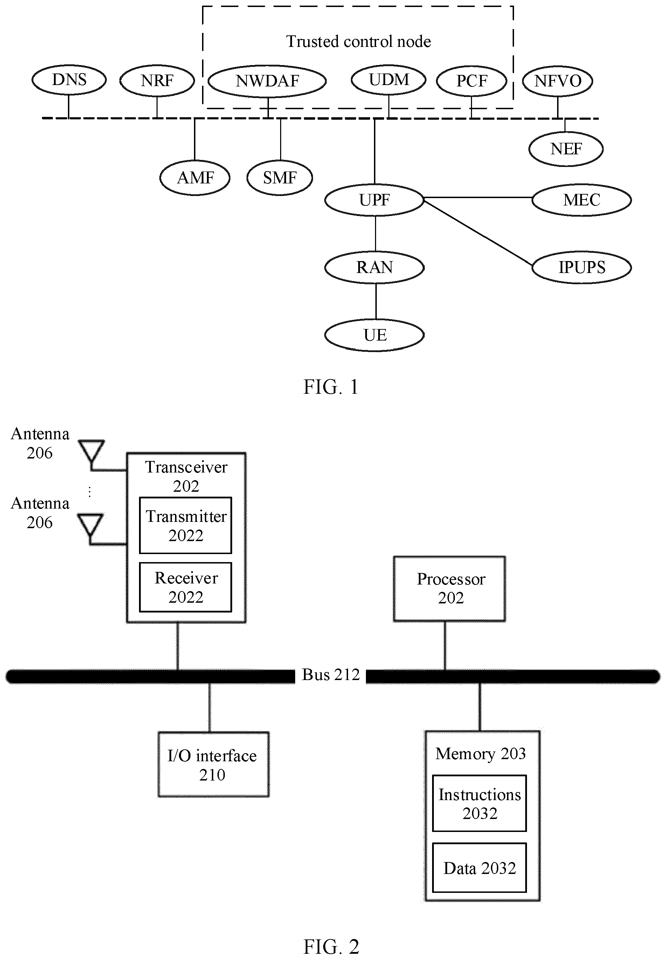

FIG. 1 is a schematic diagram of a 5G communication system according to an embodiment of this application. In a 5G mobile network architecture, a control plane function and a forwarding plane function of a mobile network management system are decoupled, and the control plane function obtained after the separation, a conventional third generation partnership project (third generation partnership project, 3GPP) control mobility management entity (mobility management entity, MME), and the like are combined into a unified control plane (control plane). A user plane function (User plane function, UPF) can implement user plane functions (SGW-U and PGW-U) of a serving gateway (serving gateway, SGW) and a packet data network gateway (packet data network gateway, PGW). Further, the unified control plane may be decomposed into an access and mobility management function (access and mobility management function, AMF), a session management function (session management function, SMF), a network exposure function (Network Exposure Function, NEF), a network function repository function (Network Function Repository Function, NRF), a policy control function (Policy Control Function, PCF), a unified data management (Unified Data Management, UDM), a network data analytics function (Network Data Analytics Function, NWDAF), and the like. User plane network function devices include a user plane function (User Plane Function, UPF) and the like. A mobile edge computing device (mobile edge computing, MEC), an inter-public land mobile network user plane security function (inter-public land mobile network user plane security function, IPUPS), and a radio access network (radio access network, RAN) device are connected to the UPF. A terminal device connected to the RAN is also referred to as user equipment (user equipment, UE). It should be noted that the IPUPS may also be integrated in the UPF.

The communication system further includes a domain name server (Domain Name Server, DNS), a network slice selection function (Network Slice Selection Function, NSSF), a network function virtualization orchestrator (Network Function Virtualization Orchestrator, NFVO), a virtualized network function manager (virtualized network function Manager, VNFM), or a management plane network management system.

In the communication system, a newly established network function is referred to as a trusted control node. The trusted control node is configured to: collect trusted collected information from each network function, generate trusted policy information based on the trusted collected information, and distribute the trusted policy information to each network function. Each network function detects signaling and/or data based on the trusted policy information, to ensure communication security in the communication system. The trusted control node may be a newly deployed independent network function, or may be integrated with the NWDAF, the UDM, and/or the PCF. The trusted control node may be integrated with another network function in the communication system. This is not limited herein. In embodiments of this application, for ease of description, an example in which the trusted control node is integrated with the NWDAF, the UDM, and/or the PCF is used for description.

The terminal device in the system is not limited to a 5G network, and includes a mobile phone, an internet-of things device, a smart household device, an industrial control device, a vehicle device, an unmanned aerial vehicle device, and the like. In embodiments of this application, the terminal device is various terminal devices or apparatuses having a wireless communication function, for example, a mobile phone (also referred to as a "cellular" phone) and a computer having a mobile terminal, or may be a portable, pocket-sized, handheld, computer built-in, or vehicle-mounted mobile apparatus, which exchange language and/or data with the radio access network. For example, the terminal device is a device such as a personal communications service (personal communications service, PCS) phone, a cordless phone, a session initiation protocol (SIP) phone, a wireless local loop (wireless local loop, WLL) station, or a personal digital assistant (personal digital assistant, PDA). The terminal device may also be referred to as a system, a subscriber unit (subscriber Unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), a user device (user device), or user equipment (user equipment). The terminal device is, for example, a vehicle, a vehicle-mounted device, a vehicle-mounted module or unit, a flight device (including but not limited to an unmanned aerial vehicle), an airborne device, an airborne module or unit, a drive test infrastructure device, a handheld device, a wearable device, a computing device, or another processing device connected to a wireless modem, such as vehicle user equipment (vehicle user equipment, VUE) or air conditioner user equipment.

A main function of the radio access network (RAN) device is to control a user to access a mobile communication network through a wireless network. The RAN is a part of the mobile communication system. The RAN implements a radio access technology. Conceptually, the RAN resides in a device (such as a mobile phone, a computer, or any remote control machine) and provides a connection to a core network thereof. The RAN device includes but is not limited to: a gNodeB (g NodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a baseband unit (Base Band Unit, BBU), a transmission point (transmitting and receiving point, TRP), a transmitting point (transmitting point, TP), a mobile switching center, and the like, and may further include a wireless fidelity (wireless fidelity, Wi-Fi) access point (access point, AP), and the like. In embodiments of this application, for ease of description, the radio access network device is referred to as abase station.

The foregoing network functions may be network elements that are implemented on dedicated hardware, may be software instances that are run on dedicated hardware, or may be instances that implement a virtualization function on an appropriate platform. For example, the foregoing virtualization platform may be a cloud platform.

In addition, embodiments of this application are also applicable to another future-oriented communication technology, for example, 6G. Network architectures and service scenarios described in this application are intended to describe the technical solutions in this application more clearly, and do not constitute a limitation on the technical solutions provided in this application. Persons of ordinary skill in the art may know that: With evolution of network architectures and emergence of new service scenarios, the technical solutions provided in this application are also applicable to similar technical problems.

It should be noted that FIG. 1 may further include other (functional entities), and only several (functional entities) involved in this application are mainly described herein. The functional entities are connected through an Nx interface.

It should be noted that in the communication system shown in FIG. 1, the core network device may include the NEF, the DNS, the NWDAF, the UDM, the PCF, the AMF, the SMF, or the like, and may further include a network function that is not shown in the figure, such as the network slice selection function (network slice selection function, NSSF).

It should be noted that the network function in embodiments of this application may be expressed in a plurality of manners, including a network function node, a network function, a node, a network function entity, a network element, or the like.

FIG. 2 is a schematic diagram of a hardware structure of a communication apparatus according to an embodiment of this application. The communication apparatus may be a possible implementation of a network device (including a core network device and a radio access network device) or a terminal device in embodiments of this application. As shown in FIG. 2, the communication apparatus includes at least a processor 202, a memory 203, and a transceiver 202. The memory 203 is further configured to store instructions 2032 and data 2032. Optionally, the communication apparatus may further include antennas 206, an I/O (input/output, Input/Output) interface 210, and a bus 212. The transceiver 202 further includes a transmitter 2022 and a receiver 2022. In addition, the processor 202, the transceiver 202, the memory 203, and the I/O interface 210 are communicatively connected to each other through the bus 212, and the antennas 206 are connected to the transceiver 202.

The processor 202 may be a general-purpose processor, for example, but not limited to a central processing unit (Central Processing Unit, CPU), or may be a dedicated processor, for example, but not limited to a digital signal processor (Digital Signal Processor, DSP), an application-specific integrated circuit (Application Specific Integrated Circuit, ASIC), and a field programmable gate array (Field Programmable Gate Array, FPGA). In addition, the processor 202 may alternatively be a combination of a plurality of processors. In particular, in the technical solutions provided in embodiments of this application, the processor 202 may be configured to perform related steps of a communication method in subsequent method embodiments. The processor 202 may be a processor that is specially designed to perform the foregoing steps and/or operations, or may be a processor that performs the foregoing steps and/or operations by reading and executing the instructions 2032 stored in the memory 203. The processor 202 may need to use the data 2032 in a process of performing the foregoing steps and/or operations.

The transceiver 202 includes the transmitter 2022 and the receiver 2022. In an optional implementation, the transmitter 2022 is configured to send a signal by using the antenna 206, and the receiver 2022 is configured to receive a signal by using at least one of the antennas 206. In particular, in the technical solutions provided in embodiments of this application, the transmitter 2022 may be specifically configured to perform, by using at least one of the antennas 206, for example, the operation performed by a receiving module or a sending module in a network device or a terminal device when the communication method in the subsequent method embodiments is applied to the network device or the terminal device.

In this embodiment of this application, the transceiver 202 is configured to support the communication apparatus in performing the foregoing receiving function and sending function. A processor having a processing function is considered as the processor 202. The receiver 2022 may also be referred to as a receiver machine, an input port, a receiver circuit, or the like. The transmitter 2022 may be referred to as a transmitter machine, a transmitter, a transmitter circuit, or the like.

The processor 202 may be configured to execute the instructions stored in the memory 203, to control the transceiver 202 to receive a message and/or send a message, to complete functions of the communication apparatus in the method embodiments of this application. In an implementation, it may be considered that a function of the transceiver 202 is implemented by using a transceiver circuit or a dedicated transceiver chip. In this embodiment of this application, that the transceiver 202 receives a message may be understood as that the transceiver 202 inputs a message, and that the transceiver 202 sends a message may be understood as that the transceiver 202 outputs a message.

The memory 203 may be various types of storage media, for example, a random access memory (Random Access Memory, RAM), a read-only memory (Read-Only Memory, ROM), a non-volatile RAM (Non-Volatile RAM, NVRAM), a programmable ROM (Programmable ROM, PROM), an erasable PROM (Erasable PROM, EPROM), an electrically erasable PROM (Electrically Erasable PROM, EEPROM), a flash memory, an optical memory, and a register. The memory 203 is specifically configured to store the instructions 2032 and the data 2032. The processor 202 may perform the steps and/or the operations in the method embodiments of this application by reading and executing the instructions 2032 stored in the memory 203. The data 2032 may need to be used in a process of performing the operations and/or the steps in the method embodiments of this application.

Optionally, the communication apparatus may further include the I/O interface 210. The I/O interface 210 is configured to receive instructions and/or data from a peripheral device, and output instructions and/or data to the peripheral device.

The following describes a method part in embodiments of this application. A trusted communication method provided in embodiments of this application may be divided into the following steps according to a procedure: 1. A trusted control node collects trusted collected information and generates trusted policy information. 2. A core network device detects signaling and/or user data based on the trusted policy information. Descriptions are separately given below.

To generate trusted policy information, a trusted control node needs to collect trusted collected information. Specifically, FIG. 3a-1 to FIG. 3a-3 are a schematic diagram of an embodiment of a trusted communication method according to an embodiment of this application. The trusted communication method provided in this embodiment of this application includes the following steps.

301. An AMF sends trusted collected information to a trusted control node.

In this embodiment, the AMF sends the trusted collected information to the trusted control node, where the trusted collected information includes but is not limited to a 5G globally unique temporary identity/subscription permanent identifier (5G-GUTI/SUPI), registration type (registration type), last visited tracking area identity (last visited TAI), requested network slice selection assistance information (Requested NSSAI), mapping of requested network slice selection assistance information (Mapping Of Requested NSSAI), a protocol data unit session status (PDU Session status), a selected data network name (selected DNN), a UE requested data network name (UE requested DNN), AMF identifier (AMF ID), PCF identifier (PCF ID), user location information (User location information), a radio access technology type (RAT Type), a generic public subscription identifier (GPSI), UE presence in local area data network service area (UE presence in LADN service area), single network slice selection assistance information (S-NSSAI), a requested protocol data unit session type (Request PDU Session type), a small data rate control status (Small Data Rate Control Status), user equipment IP address (UE ip address), a quality of service rule (QoS Rule), a quality of service flow level (QoS Flow level), or quality of service parameters (QoS parameters).

In an optional implementation, the AMF may periodically send the trusted collected information to the trusted control node.

In another optional implementation, the AMF may receive an indication sent by the trusted control node, and send the trusted collected information to the trusted control node based on the indication.

In another optional implementation, the trusted collected information may further include an exception type, for example, an exception of user equipment signaling.

302. An SMF sends trusted collected information to the trusted control node.

In this embodiment, the SMF sends the trusted collected information to the trusted control node, where the trusted collected information includes but is not limited to a SUPI, a selected DNN, a UE requested DNN, an AMF ID, a PCF ID, user location information, a RAT type, a GPSI, UE presence in LADN service area, S-NSSAI, a UE requested DNN, a PDU session ID, a request PDU session type, a small data rate control status, a UE IP address, core network tunnel information (CN tunnel info), a QoS rule, a QoS flow level, and/or QoS parameters.

In an optional implementation, the SMF may periodically send the trusted collected information to the trusted control node.

In another optional implementation, the SMF may receive an indication sent by the trusted control node, and send the trusted collected information to the trusted control node based on the indication.

In another optional implementation, the trusted collected information may further include an exception type, for example, an exception of user equipment signaling.

303. A UPF sends trusted collected information to the trusted control node.

In this embodiment, the UPF may send the trusted collected information to the trusted control node, where the trusted collected information includes but is not limited to a source IP (source IP), a destination IP (destination IP), a source port (source port), a destination port (destination port), a transmission control protocol (TCP), a user datagram protocol (UDP), a flow control transmission protocol (SCTP), core network tunnel information (CN tunnel info), and/or access network tunnel information (AN tunnel info).

For example, a connection relationship between the UPF, a base station, and the trusted control node is shown in FIG. 3b. FIG. 3b is a schematic topology diagram of another communication system according to an embodiment of this application. In FIG. 3b, there are a UPF-A, a gNB-A, UE-A, a UPF-B, a gNB-B, UE-B, and an MEC. The foregoing network function nodes may belong to a same network or different networks. An IPUPS, a UPF-C, a gNB-C, and UE-C belong to a different network from the foregoing network function nodes. When the UPF (including the UPF-A, the UPF-B, and the UPF-C) sends the trusted collected information to the trusted control node, the trusted collected information separately carries a related identifier of each network. For example, the UPF-A sends trusted collected information about the UE-A to the trusted control node, where the trusted collected information includes information (for example, an IP address) about the UE-A; and the UPF-A sends trusted collected information about a session from the UE-A to the UE-B to the trusted control node, where the trusted collected information includes an identifier of the UE-A and information (for example, an IP address) about the UE-B.

It should be noted that the trusted collected information sent by the UPF to the trusted control node may be further recorded in a blockchain. The trusted control node may obtain, by invoking the blockchain, the trusted collected information sent by the UPF. Specifically, the blockchain stores a related credential of the trusted collected information, including but not limited to a related identifier of each network, to ensure traceability of the trusted collected information.

In an optional implementation, the UPF may periodically send the trusted collected information to the trusted control node.

In another optional implementation, the UPF may receive an indication sent by the trusted control node, and send the trusted collected information to the trusted control node based on the indication.

In another optional implementation, the trusted collected information may further include an exception type, for example, an exception of user equipment data.

304. A management plane network management system sends trusted collected information to the trusted control node.

In this embodiment, the management plane network management system may be an NFVO, a VNFM, and/or the like, and is configured to manage each network function node in a network device.

Specifically, the trusted collected information sent by the management plane network management system to the trusted control node includes abnormal data. The abnormal data is abnormal data reported by the UPF and received by the management plane network management system, and the abnormal data is obtained by the UPF by detecting user data based on a trusted policy information. For a specific detection procedure, refer to a subsequent embodiment.

It should be noted that the trusted collected information sent by the management plane network management system to the trusted control node may further include other information, for example, the trusted collected information in the foregoing steps 301 to 303. This is not limited herein.

In an optional implementation, the management plane network management system may periodically send the trusted collected information to the trusted control node.

In another optional implementation, the management plane network management system may receive an indication sent by the trusted control node, and send the trusted collected information to the trusted control node based on the indication.

In another optional implementation, the trusted collected information may further include an exception type, for example, an exception of a user equipment log.

305. An NEF sends trusted collected information to the trusted control node.

In this embodiment, a core network device obtains, through the NEF, trusted collected information delivered by an external network, where the trusted collected information is similar to the trusted collected information in the foregoing steps 301 to 303, and may further include identification information of an application function AF. Details are not described herein again. The external network may be the Internet. Then, the NEF sends the trusted collected information to the trusted control node.

In another optional implementation, the trusted control node directly obtains trusted policy information through the NEF, and updates local trusted policy information. The trusted policy information may be sent from the external network to the NEF in a form of a software package.

In an optional implementation, the NEF may periodically send the trusted collected information to the trusted control node. Specifically, the NEF periodically obtains the trusted collected information from the external network, where the trusted collected information may be trusted collected information obtained by the external network through statistics collection in a specific time period.

In another optional implementation, the NEF may receive an indication sent by the trusted control node, and obtain the trusted collected information from the external network based on the indication. Then, the NEF sends the trusted collected information to the trusted control node.

In another optional implementation, the trusted collected information may further include an exception type, for example, an exception of user equipment data.

306. An MEC sends trusted collected information to the trusted control node.

In this embodiment, the MEC may send, in a plurality of manners, the trusted collected information to the trusted control node located in the core network device. For example, a connection relationship between the MEC, a base station, and the core network device is shown in FIG. 3c. FIG. 3c is a schematic topology diagram of another communication system according to an embodiment of this application. In FIG. 3c, the trusted control node is deployed in the core network device, and the core network device establishes a connection to UE 1 through a base station 1. The core network device establishes a connection to UE 2 through a base station 2. An MEC 1 establishes a connection to the core network device. The UE 1 may send trusted collected information to the trusted control node through the base station 1, and the UE 2 may send trusted collected information to the trusted control node through the base station 2. The MEC 1/MEC 2 may send the trusted collected information to the trusted control node (through a UPF 1, a UPF 2, or the NEF). For example, the MEC 1 and the MEC 2 serve as network slice renters, to rent some services of a carrier (the core network device). It should be noted that, communication and interaction between the MEC 1 and the core network device may be directly completed through the UPF deployed in the core network device, or may be completed through a base station 3 (not shown in the figure). This is not limited herein.

In an optional implementation, alternatively, the trusted control node and the MEC may be separately deployed in the core network device. In this case, the MEC 1 and the MEC 2 serve as network slice renters. Based on an actual service requirement, the MEC 1 and the MEC 2 send the trusted collected information to the trusted control node (the core network device). The MEC 1 is used as an example. The sent trusted collected information may be an analytics result obtained after the trusted control node corresponding to the MEC 1 analyzes the trusted collected information of the MEC 1. A specific analytics method includes but is not limited to behavior rule analytics, rule determining, and artificial intelligence (Artificial Intelligence, AI) detection. Because MEC of industry users has a security requirement that data is not returned, a carrier can deliver trusted policy information through a core network device. The MEC does not return local original data to the carrier (the core network device), only locally detects data or signaling based on the trusted policy information in the MEC, and notifies or stores a detection result, or synchronizes the detection result to a blockchain, or the like. When the detection result indicates that the data or the signaling is abnormal, the MEC notifies the exception to the management plane network management system, or the MEC notifies the exception to the trusted control node. This enables the carrier to take real-time protection actions or perform audit/check when major network security is involved. An original data ticket (including but not limited to the local original data or the detection result of the MEC) can be prevented from being tampered with using a mathematical method such as a hash value (Hash), a tag, or a verification code.

The trusted collected information may further include an exception type, for example, an exception of user equipment data.

In another optional implementation, the MEC may alternatively directly send the original trusted collected information to the core network device (the trusted control node). The trusted collected information is similar to the trusted collected information described in steps 301 to 303. This is not limited herein.

In an optional implementation, the MEC sends the trusted collected information to the trusted control node through an N6 interface.

In another optional implementation, the MEC sends the trusted collected information to the trusted control node through an NEF interface.

In another optional implementation, the MEC sends the trusted collected information to the trusted control node through an internal network element interface.

It should be noted that the trusted collected information sent by the MEC to the trusted control node may be further recorded in a blockchain. The trusted control node may obtain, by invoking the blockchain, the trusted collected information sent by the MEC. Specifically, the blockchain stores a related credential of the trusted collected information, including but not limited to an identifier of the MEC, to ensure traceability of the trusted collected information.

307. An IPUPS sends trusted collected information to the trusted control node.

In this embodiment, the IPUPS sends the trusted collected information to the trusted control node. Specifically, step 307 is similar to step 303 or step 306. Details are not described again.

In another optional implementation, the trusted collected information may further include an exception type, for example, an exception of user equipment data.

308. The trusted control node generates the trusted policy information.

In this embodiment, the trusted control node generates the trusted policy information based on the trusted collected information in any one of steps 301 to 307. The trusted policy information includes but is not limited to a trusted policy detection criterion of a terminal device (also referred to as a user), a trusted policy detection criterion of a base station, a trusted policy detection criterion of a home network, a trusted policy detection criterion of a serving network, or the like.

For example, the trusted policy detection criterion of the terminal device includes a moving distance of the terminal device in a time period, an access destination address and a quantity of access times of the terminal device in a time period, a time point at which the terminal device initiates access, data traffic of the terminal device in a time period, and the like.

The trusted policy detection criterion of the base station includes but is not limited to a quantity of abnormal terminal devices currently served by the base station, and the like.

The trusted policy detection criterion of the home network includes but is not limited to a quantity of abnormal terminal devices currently served by the home network, and the like.

The trusted policy detection criterion of the serving network includes but is not limited to a quantity of abnormal terminal devices currently served by the serving network.

The trusted policy detection criterion may include a normal rule or an exception rule.

After the trusted control node generates the trusted policy information (optionally, including the trusted policy information generated by the external network and obtained through the NEF), the trusted control node distributes the trusted policy information to other network functions, for example, steps 309 to 315.

Optionally, the trusted control node adaptively adjusts the delivered trusted policy information based on different network functions.

In an optional implementation, the trusted control node periodically delivers the trusted policy information.

In another optional implementation, the trusted control node delivers the trusted policy information based on request information reported by each network function.

It should be noted that the trusted policy information may be dynamically generated trusted policy information. For example, when the trusted control node is independently deployed, the trusted policy information may be dynamically generated trusted policy information or statically configured trusted policy information. When the trusted control node is integrated with the NWDAF, the NWDAF dynamically generates the trusted policy information based on the trusted collected information. Alternatively, the trusted policy information may be statically configured trusted policy information. For example, when the trusted control node is integrated with a PCF or a UDM, the trusted policy information is preconfigured by the PCF or the UDM. The trusted policy information is also applicable to all embodiments of this application. Details are not described below again.

Optionally, the trusted control node may detect, based on the trusted policy information, the trusted collected information from each network function, to determine whether the trusted collected information is abnormal.

309. The trusted control node sends the trusted policy information to the UPF.

310. The trusted control node sends the trusted policy information to the AMF.

311. The trusted control node sends the trusted policy information to the management plane network management system.

312. The trusted control node sends the trusted policy information to the SMF.

313. The trusted control node sends the trusted policy information to the NEF.

314. The trusted control node sends the trusted policy information to the MEC.

315. The trusted control node sends the trusted policy information to the IPUPS.

It should be noted that, in steps 309 to 315, when the trusted control node is independently deployed, the trusted policy information may be directly sent by the trusted control node to the UPF, the AMF, the management plane network management system, the SMF, the NEF, the MEC, and/or the IPUPS, or may be sent to the UPF, the AMF, the management plane network management system, the SMF, the NEF, the MEC, and/or the IPUPS through the NWDAF, the PCF, or the UDM. When the trusted control node is integrated with the NWDAF, the trusted policy information may be directly sent by the trusted control node to the UPF, the AMF, the management plane network management system, the SMF, the NEF, the MEC, and/or the IPUPS. When the trusted control node is integrated with the PCF or the UDM, the trusted policy information may be directly sent by the trusted control node to the UPF, the AMF, the management plane network management system, the SMF, the NEF, the MEC, and/or the IPUPS. The foregoing descriptions are also applicable to all embodiments of this application. Details are not described below again.

316. The trusted control node determines an abnormal serving network based on the trusted policy information, and updates a network selection policy.

In this embodiment, the trusted control node determines the abnormal serving network based on the trusted policy information or based on the trusted policy information and the trusted collected information. The abnormal serving network is a serving network in which a quantity of abnormal users is greater than a threshold. For example, when a quantity of abnormal users served by a serving network is greater than M (M is a positive integer) in a statistical time period, the trusted control node determines that the serving network is an abnormal serving network. Alternatively, for example, when the trusted control node detects that a traffic level of a serving network in a statistical time period significantly exceeds a normal level by 100 times, the trusted control node determines that the serving network is an abnormal serving network.

After determining the abnormal serving network, the trusted control node records an identifier of the abnormal serving network, where the identifier of the abnormal serving network may be a serving-public land mobile network identifier (serving plmn ID); and then updates the network selection policy based on the identifier of the abnormal serving network.

Optionally, the network selection policy includes identifiers of one or more abnormal serving networks, and the identifier of the abnormal serving network recorded in the network selection policy is on a blacklist. For example, the network selection policy is shown in Table 1-1.

**Table 1-1**

| Network selection policy - blacklist |
|---|
| serving plmn ID-1 |
| serving plmn ID-5 |
| serving plmn ID-7 |
| serving plmn ID-10 |

Table 1-1 indicates that the serving networks 1, 5, 7, and 10 are abnormal serving networks.

Optionally, the network selection policy includes identifiers of one or more abnormal serving networks, and the identifier of the abnormal serving network recorded in the network selection policy is of a low priority. For example, the network selection policy is shown in Table 1-2.

**Table 1-2**

| Serving network name | Serving network priority |
|---|---|
| serving plmn ID-1 | -1 |
| serving plmn ID-6 | 1 |
| serving plmn ID-8 | 2 |
| serving plmn ID-2 | 1 |

Table 1-2 indicates that the serving network 1 is an abnormal serving network (corresponding to serving plmn ID-1) and has the lowest service priority, which is -1. The serving network priorities 1, 2, and 1 indicate that corresponding serving networks are normal serving networks, to be specific, the serving networks 2, 6, and 8 are normal serving networks.

317. The trusted control node sends the network selection policy to the UE.

In this embodiment, the trusted control node sends the identifier of the abnormal serving network to the unified data management UDM or the policy control function PCF, so that the PCF or the UDM updates a priority of the identifier of the abnormal serving network in the network selection policy, and sends the network selection policy to the terminal device.

In another optional implementation, after the trusted control node determines an abnormal network slice based on the trusted policy information or based on the trusted policy information and the trusted collected information, the trusted control node may send an updated slice selection policy (for example, a new slice identifier with a higher trustworthiness level) to the UE. Alternatively, the trusted control node may notify the core network device, to request the core network device to generate a new network slice. Alternatively, the trusted control node sends an identifier of the abnormal network slice to the slice selection function NSSF, so that the NSSF updates a priority of the identifier of the abnormal network slice in a slice selection policy (for example, lowers a priority of the abnormal network slice), to select another network slice with a stronger protection capability to replace the abnormal network slice; and/or the trusted control node notifies the access and mobility management function AMF and/or the session management function SMF to select another network slice with a stronger protection capability. This is not limited herein.

318. The UE selects another serving network.

In this embodiment, after receiving the network selection policy, the terminal device updates a locally stored network selection policy, and selects another serving network, for example, a serving network 2, based on the network selection policy.

It should be noted that steps 316 to 318 are optional steps.

319. The trusted control node determines the abnormal network slice based on the trusted policy information, and updates the slice selection policy.

In this embodiment, the trusted control node determines the abnormal network slice based on the trusted policy information or based on the trusted policy information and the trusted collected information. The trusted control node sends the identifier of the abnormal network slice to the slice selection function NSSF, so that the NSSF updates the priority of the identifier of the abnormal network slice in the slice selection policy (for example, lowers the priority of the abnormal network slice); and/or the trusted control node notifies the access and mobility management function AMF and/or the session management function SMF to select another network slice (slice for short) with a stronger protection capability. Details are not described herein.

320. The trusted control node sends the identifier of the abnormal network slice to the NSSF.

In this embodiment, in an optional implementation, after determining the abnormal network slice based on the trusted policy information or based on the trusted policy information and the trusted collected information, the trusted control node sends the identifier of the abnormal network slice to the slice selection function NSSF, so that the NSSF updates the priority of the identifier of the abnormal network slice in the slice selection policy (for example, lowers the priority of the abnormal network slice), to select another network slice with a stronger protection capability to replace the abnormal network slice; and/or the trusted control node notifies the access and mobility management function AMF and/or the session management function SMF to select another network slice with a stronger protection capability. This is not limited herein.

In another optional implementation, after determining the abnormal network slice, the trusted control node updates the slice selection policy, and sends the slice selection policy to the UE through the PCF or the UDM, so that the UE updates the slice selection policy. The slice selection policy may include a new network slice identifier with a higher trustworthiness level. The UE selects, based on the slice selection policy, a new network slice, for example, a network slice 2, with a higher trustworthiness level.

In another optional implementation, after determining the abnormal network slice, the trusted control node may alternatively notify the core network device to request the core network device to generate a new network slice.

321. The NSSF updates the slice selection policy.

In this embodiment, the NSSF updates a local slice selection policy based on the received identifier of the abnormal network slice or the received slice selection policy.

It should be noted that steps 319 to 321 are optional steps.

322. The trusted control node determines an abnormal node based on the trusted policy information.

In this embodiment, in another optional implementation, the trusted control node determines the abnormal node (for example, an abnormal base station, an abnormal AMF, or an abnormal UPF) based on the trusted policy information or based on the trusted policy information and the trusted collected information. The trusted control node sends an identifier of the abnormal node to at least one of a network repository function NRF, a domain name server (Domain Name Server, DNS), the SMF, a network slice subset management function (Network Slice Subnet Management Function, NSSMF), or another network function, so that at least one of the NRF, the DNS, the SMF, the NSSMF, or the another network function selects a node with a stronger protection capability (for example, an AMF with a stronger protection capability or a UPF with a stronger protection capability), and/or the trusted control node notifies another network function to select a node with a stronger protection capability (for example, notifies the SMF to select a UPF with a stronger protection capability). Details are not described herein again.

323. The trusted control node sends the identifier of the abnormal node to the NRF, the DNS, and/or the NSSMF.

In this embodiment, the trusted control node may notify at least one of the NRF, the domain name server (Domain Name Server, DNS), the network slice subnet management function (Network Slice Subnet Management Function, NSSMF), and the another network function to select a node with a stronger protection capability. For example, the trusted control node sends the identifier of the abnormal node to the SMF, so that the SMF selects a node with a stronger protection capability.

Specifically, the trusted control node sends the identifier of the abnormal node to at least one of the NRF, the DNS, the SMF, the NSSMF, and/or the another network function, for example, sends an identifier of the abnormal UPF.

324. The NRF, the DNS, and/or the NSSMF selects a node with a stronger protection capability.

In this embodiment, after at least one of the NRF, the DNS, the SMF, the NSSMF, and/or the another network function receives the identifier of the abnormal node sent by the trusted control node, at least one of the NRF, the DNS, the SMF, the NSSMF, and/or the another network function selects a node with a stronger protection capability. The NRF is used as an example. The trusted control node sends, to the NRF, that the UPF 1 is an abnormal node. After the NRF updates a configuration (for example, lowers a priority of the UPF 1), the NRF notifies the SMF to select the UPF 2 with a stronger protection capability. It should be noted that steps 322 to 324 are optional steps.

In this embodiment of this application, the trusted control node may obtain trusted collected information of a plurality of network functions in a communication system, and generate trusted policy information based on the trusted collected information. Then, the trusted control node delivers the trusted policy information to the plurality of network functions, so that the network functions detect exchanged data and/or signaling based on the trusted policy information. This can effectively improve security of the communication system.

Based on the embodiment shown in FIG. 3a-1 to FIG. 3a-3 to FIG. 3c, the core network device detects the signaling and/or the user data based on the trusted policy information. The following uses the AMF, the SMF, and the UPF as an example to describe how a network function detects the signaling and/or the user data. It should be noted that a method for detecting signaling and/or user data based on the trusted policy information by another network function (for example, the IPUPS) in the network device is similar to the following method. Details are not described herein again. The trusted control node may further transmit the trusted policy information to the UE or another device such as the MEC. A method for detecting signaling and/or user data by the UE or the MEC based on the trusted policy information is similar to the following method. Details are not described herein again.

The SMF may receive a plurality of types of signaling, such as a NAS message, an SBA message, and an N4 interface message. Specifically, that the SMF detects a NAS message is used as an example. FIG. 4 is a schematic diagram of an embodiment of another trusted communication method according to an embodiment of this application. The trusted communication method provided in this embodiment of this application includes the following steps.

401. The SMF receives the NAS message.

In this embodiment, the SMF receives the NAS message, where the NAS message includes but is not limited to a PDU session establishment request message, a PDU session modify request message, a PDU session deletion request message, or the like.

402. The SMF receives trusted policy information sent by a trusted control node.

403. The SMF receives user plane exception information sent by a UPF.

In this embodiment, the UPF detects received user data based on the trusted policy information. When the user data is abnormal, the UPF generates the user plane exception information based on the abnormal data. The SMF receives the user plane exception information, and updates the local trusted policy information based on the user plane exception information.

Optionally, the user plane exception information may alternatively be generated by a management plane network management system based on the abnormal data uploaded by the UPF.

Specifically, for a method for generating the user plane exception information by the UPF, refer to the embodiment shown in FIG. 6.

It should be noted that an execution sequence of step 401, step 402, and step 403 is not limited in this embodiment. For example, step 401 may be first performed, then step 402 is performed, and then step 403 is performed; step 403 may be first performed, then step 401 is performed, and then step 402 is performed; step 402 may be first performed, then step 401 is performed, and then step 403 is performed; or step 402 may be first performed, then step 403 is performed, and then step 401 is performed. Details are not described herein again.

404. The SMF detects whether the NAS message is abnormal.

In this embodiment, the SMF detects, based on the trusted policy information, whether the received NAS message is abnormal.

If the NAS message is abnormal, go to step 406; if the NAS message is normal, go to step 405.

405. The SMF executes the NAS message.

In this embodiment, when the NAS message is normal, the SMF executes the NAS message.

406. The SMF notifies and/or blocks the NAS message.

In this embodiment, when the NAS message is an abnormal message, the SMF notifies and/or blocks the NAS message. For example, the SMF prevents the NAS message from being sent to another network function.

In another optional implementation, the SMF may further transmit the abnormal NAS message to a network function for security protection enhancement to perform a service.

407. The SMF reports abnormal signaling to an AMF.

In this embodiment, the SMF may report the abnormal signaling to the AMF. The abnormal signaling includes some or all content of the abnormal NAS message, for example, includes an IP address or a port number carried in the NAS message.

408. The SMF reports the abnormal signaling to the trusted control node.

In this embodiment, the SMF may report the abnormal signaling to the trusted control node. The abnormal signaling is used as a part of trusted collected information, so that the trusted control node updates the trusted policy information.

In this embodiment of this application, the SMF may detect, based on the trusted policy information, whether the NAS message that passes through the SMF is abnormal. When it is detected that the NAS message is abnormal, the NAS message may be notified and/or blocked, and the abnormal signaling is reported to the trusted control node (and/or the AMF). In this way, the trusted control node can update the trusted policy information in a timely manner. This effectively improves security of the communication system. It should be noted that the SMF may further detect other signaling based on the trusted policy information, including but not limited to an SBA message. A specific detection method is similar to that in the embodiment shown in FIG. 4. Details are not described herein again.

The AMF may receive a plurality of types of signaling, such as a NAS message, an SBA message, and an N2 interface message. Specifically, that the AMF detects a NAS message is used as an example. Specifically, FIG. 5 is a schematic diagram of an embodiment of another trusted communication method according to an embodiment of this application. The trusted communication method provided in this embodiment of this application includes the following steps.

501. The AMF receives the NAS message.

In this embodiment, this step is similar to step 401. Details are not described herein again.

502. The AMF receives abnormal signaling sent by an SMF.

In this embodiment, the AMF may receive the abnormal signaling reported by the SMF to the AMF in step 407. For details, refer to step 407. Details are not described herein again.

503. The AMF receives trusted policy information sent by a trusted control node.

It should be noted that an execution sequence of step 501, step 502, and step 503 is not limited in this embodiment. For example, step 501 may be first performed, then step 502 is performed, and then step 503 is performed; step 503 may be first performed, then step 501 is performed, and then step 502 is performed; step 502 may be first performed, then step 501 is performed, and then step 503 is performed; or step 502 may be first performed, then step 503 is performed, and then step 501 is performed. Details are not described herein again.

504. The AMF detects whether the NAS message is abnormal.

In this embodiment, this step is similar to step 404. Details are not described herein again.

If the NAS message is abnormal, go to step 506; if the NAS message is normal, go to step 505.

505. The AMF executes the NAS message.

In this embodiment, this step is similar to step 505. Details are not described herein again.

506. The AMF notifies and/or blocks the NAS message.

In this embodiment, this step is similar to step 406. Details are not described herein again.

507. The AMF reports the abnormal signaling to the trusted control node.

In this embodiment, this step is similar to step 408. Details are not described herein again.

In this embodiment of this application, similar to the SMF, the AMF may detect, based on the trusted policy information, whether the NAS message that passes through the AMF is abnormal. When it is detected that the NAS message is abnormal, the NAS message may be notified and/or blocked, and the abnormal signaling is reported to the trusted control node. In this way, the trusted control node can update the trusted policy information in a timely manner. This effectively improves security of the communication system. It should be noted that the AMF may further detect other signaling based on the trusted policy information, including but not limited to an SBA message. A specific detection method is similar to that in the embodiment shown in FIG. 5. Details are not described herein again.

Specifically, FIG. 6 is a schematic diagram of an embodiment of another trusted communication method according to an embodiment of this application. The trusted communication method provided in this embodiment of this application includes the following steps.

601. A UPF receives user data.

In this embodiment, the UPF receives the user data. The user data includes but is not limited to data of a base station managed by the UPF, data of a terminal device managed by the base station, data of an MEC managed by the UPF, or data of an external data network received by the UPF.

602. The UPF receives trusted policy information sent by a trusted control node.

603. The UPF receives the user plane exception information sent by a management plane network management system.

In this embodiment, the UPF receives the user plane exception information sent by the management plane network management system. The UPF updates the local trusted policy information based on the user plane exception information.

Specifically, this step is similar to step 403. Details are not described herein again.

It should be noted that an execution sequence of step 601, step 602, and step 603 is not limited in this embodiment. For example, step 601 may be first performed, then step 602 is performed, and then step 603 is performed; step 603 may be first performed, then step 601 is performed, and then step 602 is performed; step 602 may be first performed, then step 601 is performed, and then step 603 is performed; or step 602 may be first performed, then step 603 is performed, and then step 601 is performed. Details are not described herein again.

604. The UPF detects whether the data is abnormal.

In this embodiment, the UPF detects, based on the trusted policy information, whether the received user data is abnormal.

If the user data is abnormal, go to step 606; if the user data is normal, go to step 605.

605. The UPF executes a service corresponding to the data.

In this embodiment, if the user data is normal, the UPF executes the service corresponding to the data.

606. The UPF notifies and/or blocks the service corresponding to the data.

In this embodiment, if the user data is abnormal, the UPF notifies and/or blocks the service corresponding to the data, including but not limited to: notifying and/or blocking a data flow corresponding to the user data, or notifying and/or blocking access of a terminal device (or MEC) corresponding to the user data.

In another optional implementation, the UPF may further transmit the abnormal user data to a network function for security protection enhancement to perform a service.

607. The UPF reports abnormal data to the management plane network management system.

In this embodiment, the UPF reports the abnormal data to the management plane network management system.

In an optional implementation, after collecting abnormal data detected in a time period, the UPF reports the abnormal data to the management plane network management system.

In another optional implementation, the UPF reports detected abnormal data to the management plane network management system in real time.

After receiving the abnormal data, the management plane network management system performs statistical analytics on the abnormal data and generates the user plane exception information. The management plane network management system may send the user plane exception information to the SMF or the trusted control node. The user plane exception information is for updating the trusted policy information.

608. The UPF reports the abnormal data to the trusted control node.

In this embodiment, the UPF may directly report the abnormal data to the trusted control node.

In an optional implementation, after collecting abnormal data detected in a time period, the UPF reports the abnormal data to the trusted control node.

In another optional implementation, the UPF reports the detected abnormal data to the trusted control node in real time.

609. The UPF reports the abnormal data to the SMF.

In this embodiment, the UPF may further report the abnormal data to the SMF, and the SMF updates the local trusted policy information based on the abnormal data.

In this embodiment of this application, similar to the SMF or the AMF, the UPF may detect, based on the trusted policy information, whether the user data that passes through the UPF is abnormal. When it is detected that the user data is abnormal, the service corresponding to the user data may be notified and/or blocked, and the abnormal data is reported to the trusted control node. In this way, the trusted control node can update the trusted policy information in a timely manner. This effectively improves security of the communication system.

Based on the embodiments shown in FIG. 3a-1 to FIG. 3a-3 to FIG. 6, the UPF may further detect, based on the trusted policy information, whether user equipment (also referred to as a terminal device, a terminal, or a user) in a home network is abnormal. When determining that the home network is an abnormal home network, the SMF may further determine a UPF of a higher protection level. In embodiments of this application, the UPF of the higher protection level is referred to as a first UPF, and the original UPF is referred to as a second UPF. The first UPF is configured to process data of the abnormal home network. Specifically, FIG. 7a-1 and FIG. 7a-2 are a schematic diagram of an embodiment of another trusted communication method according to an embodiment of this application. The trusted communication method provided in this embodiment of this application includes the following steps.

In this embodiment, an SMF learns of related information about an abnormal home network. There are a plurality of optional implementation solutions, which are respectively corresponding to step 701a to step 704a, step 701b and step 702b, step 701c and step 702c, step 701d to step 703d, and step 701e to step 703e. Descriptions are separately provided below.

### Step 701a to step 704a:

701a. A second UPF detects whether user equipment in a home network is abnormal.

In this embodiment, the second UPF detects, based on trusted policy information, whether each user equipment in the home network is abnormal. A detection manner includes but is not limited to: detecting data of the user equipment, detecting an access destination and a quantity of access times of the user equipment in a time period, detecting data traffic of the user equipment in a time period, and/or detecting a moving distance of the user equipment in a time period.

For example, when a quantity of times that the user equipment accesses an unauthorized network slice in a time period reaches a threshold, the second UPF determines that the user equipment is abnormal user equipment.

Optionally, a trusted control node detects, based on a behavior pattern analytics method or an AI processing method, whether the user equipment is abnormal.

702a. The second UPF sends information about the abnormal user equipment to the trusted control node.

In this embodiment, the second UPF sends the information about the abnormal user equipment, for example, a media access control (media access control, MAC) address of the abnormal user equipment, to the trusted control node. The information about the abnormal user equipment further includes an identifier of the home network, for example, a PLMN ID. This is not limited herein.

703a. The trusted control node detects whether the home network is abnormal.

In this embodiment, after receiving the information about the abnormal user equipment, the trusted control node counts a total quantity, corresponding to the information about the abnormal user equipment, of abnormal user equipments in the home network. When a quantity of abnormal user equipments in a statistical time period exceeds a first threshold, the trusted control node determines that the home network is an abnormal home network.

In an optional implementation, the first threshold is a preconfigured fixed value. This is not limited herein.

In another optional implementation, the trusted policy information generated by the trusted control node may include the first threshold. That is, the trusted control node determines the first threshold based on the trusted collected information.

In another optional implementation, the trusted control node may determine, based on another algorithm, the first threshold corresponding to the home network. This is not limited herein.

Optionally, the trusted control node detects, based on the behavior pattern analytics method or the AI processing method, whether the home network is abnormal.

704a. The trusted control node sends the information about the abnormal home network to the SMF.

In this embodiment, the trusted control node sends the information about the abnormal home network to the SMF, where the information about the abnormal home network includes an identifier of the abnormal home network, for example, a PLMN ID of the abnormal home network.

After step 704a, step 705 is performed.

### Step 701b and step 702b:

701b. A second UPF detects whether user equipment in a home network is abnormal.

In this embodiment, step 701b is similar to step 701a. Details are not described herein again.

702b. The second UPF sends information about an abnormal user equipment to the SMF.

In this embodiment, the second UPF sends the information about the abnormal user equipment, for example, a media access control (media access control, MAC) address of the abnormal user equipment, to the SMF. The information about the abnormal user equipment further includes an identifier of the home network, for example, a PLMN ID. This is not limited herein.

After receiving the information about the abnormal user equipment, the SMF counts a total quantity, corresponding to the information about the abnormal user equipment, of abnormal user equipments in the home network. When a total quantity of abnormal user equipments in a statistical time period reaches a threshold, the SMF determines that the home network is an abnormal home network.

Optionally, the SMF detects, based on a behavior pattern analytics method or an AI processing method, whether a base station is abnormal.

After step 701b, step 705 is performed.

### Step 701c and step 702c:

701c. A trusted control node detects whether user equipment in a home network is abnormal.

In this embodiment, first, the trusted control node collects trusted collected information in a second UPF, where the trusted collected information includes related data of the user equipment in the home network. Then, the trusted control node detects the trusted collected information based on trusted policy information, and determines whether the user equipment in the home network is abnormal. A specific detection method is similar to that in step 701b. Details are not described herein again.

702c. The trusted control node sends information about an abnormal home network to the SMF.

In this embodiment, this step is similar to step 704a. Details are not described herein again.

After step 702c, step 705 is performed.

### Step 701d to step 703d:

701d. A trusted control node detects whether user equipment in a home network is abnormal.

In this embodiment, this step is similar to step 701c. Details are not described herein again.

702d. The trusted control node sends information about an abnormal home network to an AMF.

703d. The AMF sends the information about the abnormal home network to the SMF.

In this embodiment, the AMF forwards the information about the abnormal home network from the trusted control node to the SMF.

After step 703d, step 705 is performed.

### Step 701e to step 703e:

701e. A second UPF detects whether user equipment in a home network is abnormal.

In this embodiment, this step is similar to step 701a. Details are not described herein again.

702e. The second UPF sends information about an abnormal home network to an AMF.

In this embodiment, this step is similar to step 702d. Details are not described herein again.

703e. The AMF sends the information about the abnormal home network to the SMF.

In this embodiment, this step is similar to step 703d. Details are not described herein again.

After step 703e, step 705 is performed.

705. The SMF determines a first UPF.

In this embodiment, when the SMF determines that there is an abnormal home network, the SMF determines the first UPF, where a protection capability (or referred to as security performance) of the first UPF is higher than that of the second UPF, and processes related data of the abnormal home network through the first UPF. In addition, the SMF deletes data of the second UPF, including but not limited to that, the SMF releases a resource on the second UPF.

Specifically, the SMF may select a UPF with a high protection capability as the first UPF through a network repository function NRF or a network slice selection function NSSF. The NRF or the NSSF stores a trustworthiness level (including a protection capability) of each UPF.

In this embodiment of this application, a core network device may determine whether the home network is abnormal, and further processes related data of the home network through the UPF with the higher protection capability. This improves communication security.

After the SMF determines the first UPF, the SMF processes the data of the abnormal home network through the first UPF. For a specific procedure, refer to FIG. 7b. FIG. 7b is a schematic diagram of an embodiment of another trusted communication method according to an embodiment of this application. The trusted communication method provided in this embodiment of this application includes the following steps.

S1. An SMF sends a session establishment request message to a first UPF.

In this embodiment, the SMF indicates each user (terminal device) in a home network to send the session establishment request message to the first UPF through the SMF. The session establishment request message further carries an identifier of each terminal device.

S2. The first UPF sends a session establishment response message (carrying core network tunnel information) to the SMF.

In this embodiment, the first UPF sends the session establishment response message to the SMF based on the session establishment request message. The session establishment response message carries first core network tunnel information (CN tunnel info), and the core network tunnel information includes an IP address, a tunnel number, a port number, and/or the like of a core network in which the first UPF is located.

S3. The SMF sends the first core network tunnel information to an AMF.

In this embodiment, the SMF sends the first core network tunnel information to the AMF. For example, the first core network tunnel information is sent in an Namf_communication_N1N2MessageTransfer service message.

S4. The AMF sends an N2 PDU session modify request message (carrying the first core network tunnel information) to a RAN.

In this embodiment, for example, the AMF sends the N2 PDU session modify request (N2 PDU session modify request) message to the RAN, where the N2 PDU session modify request message carries the first core network tunnel information.

S5. The RAN sends an N2 PDU session modify response message (carrying access network tunnel information) to the AMF.

In this embodiment, the RAN sends an N2 PDU session modify response message to the AMF, where the N2 PDU session modify response message carries the access network tunnel information. The access network tunnel information includes an IP address of the RAN, a tunnel number, a port number, and/or the like.

S6. The AMF sends a PDU session update context response message (carrying the access network tunnel information) to the SMF.

In this embodiment, for example, the PDU session update context response message is Nsmf_PDUSession_UpdateSMContextRequest. The PDU session update context response message carries the access network tunnel information.

S7. The SMF sends an N4 session modify request message (carrying the access network tunnel information) to the first UPF.

In this embodiment, for example, the N4 session modify request message is an N4 session modify request. The N4 session modify request message carries the access network tunnel information.

S8. The first UPF sends an N4 session modify response to the SMF.

In this embodiment, after sending the N4 session modify response (N4 Session modify response) message to the SMF, the first UPF indicates related data of the terminal device in the home network (abnormal), to transfer the data to the first UPF for processing. A core network device may delete a second UPF.

Based on the embodiments shown in FIG. 3a-1 to FIG. 3a-3 to FIG. 6, the UPF may further detect, based on the trusted policy information, whether a base station is abnormal. When determining that the base station is an abnormal base station, the SMF may further determine a UPF of a higher trustworthiness level. In this embodiment of this application, the UPF of the higher trustworthiness level is referred to as a first UPF, and the original UPF is referred to as a second UPF. The first UPF is configured to process data of the abnormal base station. Specifically, FIG. 8a-1 and FIG. 8a-2 are a schematic diagram of an embodiment of another trusted communication method according to an embodiment of this application. The trusted communication method provided in this embodiment of this application includes the following steps.

In this embodiment, a UPF learns of related information of an abnormal base station. There are a plurality of optional implementation solutions, which are respectively corresponding to step 801a to step 803a, step 801b and step 802b, step 801c and step 802c, step 801d to step 803d, and step 801e to step 803e. Descriptions are separately provided below.

### Step 801a to step 803a:

801a. A second UPF detects whether a base station is abnormal.

In this embodiment, the second UPF detects, based on trusted policy information, whether the base station is abnormal. Specifically, when it is detected that a quantity of pieces of abnormal signaling and/or an amount of abnormal data of the base station in a statistical time period is greater than a threshold, the base station is determined as an abnormal base station. For example, within M hours, when a quantity of pieces of accumulated abnormal signaling of a base station is greater than N, it is determined that the base station is an abnormal base station, where M is a positive integer and N is a positive integer.

Optionally, the second UPF detects, based on a behavior pattern analytics method or an AI processing method, whether the base station is abnormal.

802a. The second UPF sends information about the abnormal base station to a trusted control node.

In this embodiment, the second UPF sends the information about the abnormal base station to the trusted control node. For example, the information about the abnormal base station is an IP address of the abnormal base station.

803a. The trusted control node sends the information about the abnormal base station to an SMF.

After step 803a, step 805 is performed.

### Step 801b and step 802b:

801b. A second UPF detects whether a base station is abnormal.

In this embodiment, step 801b is similar to step 801a. Details are not described herein again.

802b. The second UPF sends information about an abnormal base station to an SMF.

In this embodiment, the second UPF directly sends the information about the abnormal base station to the SMF.

After step 802b, step 805 is performed.

### Step 801c and step 802c:

801c. A trusted control node detects whether a base station is abnormal.

In this embodiment, first, the trusted control node collects trusted collected information in a second UPF, where the trusted collected information includes related data of the base station. Then, the trusted control node detects the trusted collected information based on trusted policy information, and determines whether the base station is abnormal. A specific detection method is similar to that in step 801a. Details are not described herein again.

802c. The trusted control node sends information about an abnormal base station to an SMF.

After step 802c, step 805 is performed.

### Step 801d to step 803d:

801d. A trusted control node detects whether a base station is abnormal.

In this embodiment, this step is similar to step 801c. Details are not described herein again.

802d. The trusted control node sends information about an abnormal base station to an AMF.

803d. The AMF sends the information about the abnormal base station to an SMF.

In this embodiment, the AMF forwards the information about the abnormal base station from the trusted control node to the SMF.

After step 803d, step 805 is performed.

### Step 801e to step 803e:

801e. A second UPF detects whether a base station is abnormal.

In this embodiment, this step is similar to step 801a. Details are not described herein again.

802e. The second UPF sends information about an abnormal base station to an AMF.

803e. The AMF sends the information about the abnormal base station to an SMF.

After step 803e, step 805 is performed.

805. The SMF determines a first UPF.

In this embodiment, when the SMF determines that there is an abnormal base station, the SMF determines the first UPF, where a protection capability (or referred to as security performance) of the first UPF is higher than that of the second UPF, and uses the first UPF to process related data of the abnormal base station. In addition, the SMF deletes data of the second UPF, including but not limited to that, the SMF releases a resource on the second UPF.

Specifically, the SMF may select a UPF with a high protection capability as the first UPF through a network repository function NRF or a network slice selection function NSSF. The NRF or the NSSF stores a trustworthiness level (including a protection capability) of each UPF.

In this embodiment of this application, a core network device may determine whether the base station is abnormal, and further processes related data of the base station through the UPF with the higher protection capability. This improves communication security.

After the SMF determines the first UPF, the SMF processes the data of the abnormal base station through the first UPF. For a specific procedure, refer to FIG. 8b. FIG. 8b is a schematic diagram of an embodiment of another trusted communication method according to an embodiment of this application. The trusted communication method provided in this embodiment of this application includes the following steps.

D1. An SMF sends a session establishment request message to a first UPF.

In this embodiment, the SMF indicates each user (terminal device) of a base station to send the session establishment request message to the first UPF through the SMF. The session establishment request message further carries an identifier of each terminal device.

D2. The first UPF sends a session establishment response message (carrying first core network tunnel information) to the SMF.

In this embodiment, the first UPF sends the session establishment response message to the SMF based on the session establishment request message. The session establishment response message carries first core network tunnel information (CN tunnel info), and the core network tunnel information includes an IP address, a tunnel number, a port number, and/or the like of a core network in which the first UPF is located.

D3. The SMF sends the first core network tunnel information and abnormal access network tunnel information to an AMF.

In this embodiment, the SMF sends the first core network tunnel information and the abnormal access network tunnel information to the AMF. For example, the first core network tunnel information and the abnormal access network tunnel information are sent in an Namf_communication_N1N2MessageTransfer service message. The abnormal access network tunnel information is access network tunnel information of an abnormal base station, and includes an IP address of the abnormal base station, a tunnel number, a port number, and/or the like.

D4. The AMF sends an N2 PDU session request message (carrying the first core network tunnel information) to a RAN.

In this embodiment, the AMF determines the RAN based on the abnormal access network tunnel information. Then, the AMF sends the N2 PDU session request (N2 PDU session Request) message to the RAN, where the N2 PDU session request message carries the first core network tunnel information.

D5. The RAN sends an N2 PDU session response message (carrying first access network tunnel information) to the AMF.

In this embodiment, the RAN sends the N2 PDU session modify response message to the AMF, where the N2 PDU session modify response message carries the first access network tunnel information. The first access network tunnel information may be different from the abnormal access network tunnel information.

D6. The AMF sends a PDU session update context response message (carrying the first access network tunnel information) to the SMF.

In this embodiment, for example, the PDU session update context response message is Nsmf_PDUSession_UpdateSMContextRequest.

D7. The SMF sends an N4 session modify request message (carrying the first access network tunnel information) to the first UPF.

In this embodiment, for example, the N4 session modify request message is an N4 session modify request.

D8. The first UPF sends an N4 session modify response to the SMF.

In this embodiment, after sending the N4 session modify response (N4 Session modify response) message to the SMF, the first UPF indicates related data of the abnormal base station, to transfer the data to the first UPF for processing. A core network device may delete a second UPF.

Based on the embodiments shown in FIG. 1 to FIG. 8b, in embodiments of this application, network functions in the network device may be further classified based on a trustworthiness level. Specifically, FIG. 9a is a schematic diagram of a system architecture of network functions in a conventional technology. Based on network permission classification, network functions may be classified into a network carrier, a subscription data party, a network slice renter, and a roaming party.

The network carrier includes a physical carrier and a virtual carrier. The physical carrier generates a digital sovereignty boundary based on a network code (where a PLMN includes a country code and the network code), which corresponds to a physical network device. Carriers take national legal responsibilities, infrastructure operation responsibilities, and individual user privacy protection responsibilities for trusted network management. The physical carrier is responsible for trusted subscription management of a user of the physical carrier. The virtual carrier rents network use rights from the physical carrier. Each carrier has its own number segments (allocated by a unified data management (UDM), a home subscriber server (HSS), a home location register (HLR), or a PCF/policy and charging rules function (PCRF)), does not correspond to a physical network device, and agrees upon a network area, a function, service assurance, and charging based on subscription data. Trusted management of an independent subscription data device is performed by the virtual carrier. Carriers take national legal responsibilities, infrastructure operation responsibilities, and privacy protection responsibilities of individual users for trusted network management.

Network slice renter: Internet companies rent network slices from the physical carrier without crossing carrier (OTT) services, third-party carriers, or individuals, and have use rights of some network resource slices in a lease period. If the slice renter allocates numbers independently, the slice renter needs to be responsible for trusted management of subscription data. For other network responsibilities, the slice renter and the carrier jointly perform management based on trustworthiness requirements. For example, if the industry requires that data be not uploaded, the carrier can only use detection methods to detect suspicious situations and keep the suspicious situations for detection by both parties together with a supervision department.

Roaming party: A visited network, serving as the physical carrier, takes legal responsibilities of the visited country, infrastructure operation responsibilities, and privacy protection responsibilities of individual users in a visited area. A home carrier is responsible for communication services and privacy of individual users in a home area, and is also responsible for trusted management of subscription data.

Specifically, the network carrier includes at least one of the following network function nodes: an NFVO, a DNS, an NRF, an NSSF, an NWDAF, an NEF, an AMF, an SMF, a UP, a RAN, an IPUPS, and/or an MEC, and a network function node included by the subscription data party. The subscription data party includes at least one of the following network function nodes: a UDM, a PCF, an authentication server function (AUSF), a home subscriber server (HSS)/home location register (HLR), and/or an authentication, authorization, and accounting server (AAA server). The network slice renter includes an MEC. The roaming party includes another network carrier that communicates through the IPUPS.

A minimum set of digital sovereignty management of the network carrier is a DNS/NRF/network management system/NSSF, which determines a network topology. A default AMF, and a minimum set of SMFs/UPFs provide basic services. Based on this, the AMF /SMF IUPF /NWD AF /NEF / gNB can be created by trustworthiness level, and network function nodes can be optionally combined.

In embodiments of this application, the foregoing network function nodes provided by the network carrier are classified based on trustworthiness levels. Different services may be processed by network functions of different trustworthiness levels. Descriptions are provided by using an example in which there are three trustworthiness levels: high trustworthiness, medium trustworthiness, and low trustworthiness. FIG. 9b is a schematic diagram of an architecture of a network function according to an embodiment of this application.

In FIG. 9b, network function nodes of a network carrier (and a data subscriber) of different trustworthiness levels may provide services for different UEs, MECs, or IPUPSs based on different actual trustworthiness level requirements.

In an optional implementation, different trustworthiness levels are preconfigured for different network functions according to a pre-configuration of a user.

The foregoing mainly describes the solutions provided in embodiments of this application from the perspective of the methods. It may be understood that, to implement the foregoing functions, a communication apparatus includes corresponding hardware structures and/or software modules for performing the functions. A person of ordinary skill in the art should easily be aware that, in combination with the examples described in embodiments disclosed in this specification, modules, algorithms and steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of the network device (including the core network device and the radio access network device) or the terminal device may be obtained through division based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

The following describes in detail a communication apparatus in this application. FIG. 10 is a schematic diagram of an embodiment of the communication apparatus according to an embodiment of this application. The communication apparatus may be deployed in a network device. The communication apparatus includes:
a transceiver module 1001, configured to receive a non-access stratum NAS message, where
the transceiver module 1001 is further configured to obtain trusted policy information; and
a processing module 1002, configured to detect, based on the trusted policy information, whether the NAS message is abnormal.

If the NAS message is abnormal,
the processing module 1002 is further configured to notify and/or block the NAS message;
the transceiver module 1001 is further configured to report abnormal signaling to a trusted control node; and/or
the transceiver module 1001 is further configured to report the abnormal signaling to an access and mobility management function AMF, where the abnormal signaling includes all or a part of the NAS message.

In some optional embodiments of this application,
the transceiver module 1001 is specifically configured to obtain the trusted policy information from the trusted control node, where the trusted control node includes at least one of a policy control function PCF, a unified data management UDM, a network data analytics function NWDAF, or an independent network function entity.

In some optional embodiments of this application,
the transceiver module 1001 is specifically configured to receive user plane exception information sent by a user plane function UPF; and
the processing module 1002 is specifically configured to generate the trusted policy information based on the user plane exception information.

FIG. 11 is a schematic diagram of an embodiment of a communication apparatus according to an embodiment of this application. The communication apparatus includes:
a transceiver module 1101, configured to receive a non-access stratum NAS message, where
the transceiver module 1101 is further configured to obtain trusted policy information; and
a processing module 1102, configured to detect, based on the trusted policy information, whether the NAS message is abnormal.

If the NAS message is abnormal,
the processing module 1102 is further configured to notify and/or block the NAS message; and/or
the transceiver module 1101 is further configured to report abnormal signaling to a trusted control node, where the abnormal signaling includes all or a part of the NAS message.

In some optional embodiments of this application,
the transceiver module 1101 is specifically configured to obtain the trusted policy information from the trusted control node, where the trusted control node includes at least one of a policy control function PCF, a unified data management UDM, a network data analytics function NWDAF, or an independent network function entity.

In some optional embodiments of this application,
the transceiver module 1101 is specifically configured to receive the abnormal signaling sent by a session management function SMF; and
the transceiver module 1101 is specifically configured to generate the trusted policy information based on the abnormal signaling.

In some optional embodiments of this application,
the transceiver module 1101 is specifically configured to send the abnormal signaling to the NWDAF; and
the transceiver module 1101 is specifically configured to report the abnormal signaling to the trusted control node.

FIG. 12 is a schematic diagram of an embodiment of a communication apparatus according to an embodiment of this application. The communication apparatus includes:
a transceiver module 1201, configured to receive user data, where
the transceiver module 1201 is further configured to obtain trusted policy information; and
a processing module 1202, configured to detect, based on the trusted policy information, whether the user data is abnormal.

If the user data is abnormal,
the processing module 1202 is further configured to notify and/or block a service corresponding to the user data;
the transceiver module 1201 is further configured to report abnormal data to a trusted control node;
the transceiver module 1201 is further configured to report the abnormal data to a management plane network management system, where the abnormal data includes the user data; and/or
the transceiver module 1201 is further configured to report the abnormal data to a session management function SMF, where the abnormal data includes the user data.

In some optional embodiments of this application,
the transceiver module 1201 is specifically configured to obtain the trusted policy information from the trusted control node, where the trusted control node includes at least one of a policy control function PCF, a unified data management UDM, a network data analytics function NWDAF, or an independent network function entity.

In some optional embodiments of this application,
the transceiver module 1201 is further configured to receive user plane exception information sent by the management plane network management system and/or the SMF, where the user plane exception information is generated by the management plane network management system and/or the SMF based on the abnormal data; and
the processing module 1202 is further configured to generate the trusted policy information based on the user plane exception information.

In some optional embodiments of this application,
the transceiver module 1201 is further configured to send the abnormal data to the NWDAF; and
the transceiver module 1201 is further configured to report the abnormal data to the trusted control node.

FIG. 13 is a schematic diagram of an embodiment of a communication apparatus according to an embodiment of this application. The communication apparatus includes:
a transceiver module 1301, configured to receive information about an abnormal base station, where
the transceiver module 1301 is further configured to obtain trusted policy information; and
a processing module 1302, configured to determine a first user plane function UPF based on the trusted policy information, where a protection capability of the first UPF is higher than that of a second UPF, and the first UPF is configured to currently process data of the abnormal base station.

In some optional embodiments of this application,
the transceiver module 1301 is further configured to indicate the first UPF to process the data of the abnormal base station; and
the transceiver module 1301 is further configured to indicate the second UPF to delete the data of the abnormal base station.

In some optional embodiments of this application,
the transceiver module 1301 is specifically configured to receive the information about the abnormal base station from at least one of an access and mobility management function AMF, a UPF, or a network data analytics function NWDAF.

In some optional embodiments of this application,
the transceiver module 1301 is further configured to obtain the trusted policy information from a trusted control node, where the trusted control node includes at least one of a policy control function PCF, a unified data management UDM, the network data analytics function NWDAF, or an independent network function entity.

FIG. 14 is a schematic diagram of an embodiment of a communication apparatus according to an embodiment of this application. The communication apparatus includes:
a transceiver module 1401, configured to obtain trusted policy information, where
the transceiver module 1401 is further configured to receive information about abnormal user equipment or information about an abnormal home network, where the abnormal user equipment belongs to the abnormal home network; and
a processing module 1402, configured to: if a quantity of abnormal user equipments in the abnormal home network exceeds a first threshold,
determine a first user plane function UPF based on the trusted policy information, where a protection capability of the first UPF is higher than that of a second UPF, and the first UPF is configured to currently process data of the abnormal home network.

In some optional embodiments of this application,
the transceiver module 1401 is further configured to indicate the first UPF to process the data of the abnormal home network; and
the transceiver module 1401 is further configured to indicate the second UPF to delete the data of the abnormal home network.

In some optional embodiments of this application,
the transceiver module 1401 is further configured to receive the information about the abnormal user equipment or the information about the abnormal home network from at least one of an access and mobility management function AMF, the second UPF, a network data analytics function NWDAF, or an independent network function entity.

In some optional embodiments of this application, the transceiver module 1401 is further configured to obtain the trusted policy information from a trusted control node, where the trusted control node includes at least one of a policy control function PCF, a unified data management UDM, or the network data analytics function NWDAF.

FIG. 15 is a schematic diagram of an embodiment of a communication apparatus according to an embodiment of this application. The communication apparatus includes:
a transceiver module 1501, configured to obtain trusted collected information from at least one of a policy control function PCF, an access and mobility management function AMF, a session management function SMF, a user plane function UPF, a management plane network management system, a network exposure function NEF, a multi-access edge computing MEC, or an inter-public land mobile network user plane security function IPUPS; and
a processing module 1502, configured to determine trusted policy information based on the trusted collected information.

The transceiver module 1501 is further configured to send the trusted policy information to at least one of the AMF, the SMF, the UPF, the management plane network management system, the NEF, the MEC, or the IPUPS.

In some optional embodiments of this application,
the transceiver module 1501 is further configured to receive, through the NEF, the trusted collected information sent by the MEC; and
the transceiver module 1501 is further configured to send the trusted policy information to the MEC through the NEF; and/or
the transceiver module 1501 is further configured to receive, through the UPF, the trusted collected information sent by the MEC; and
the transceiver module 1501 is further configured to send the trusted policy information to the MEC through the UPF.

In some optional embodiments of this application, the trusted control node includes at least one of a policy control function PCF, a unified data management UDM, or a network data analytics function NWDAF.

In some optional embodiments of this application,
the processing module 1502 is further configured to determine an abnormal serving network based on the trusted policy information or based on the trusted policy information and the trusted collected information; and
the transceiver module 1501 is further configured to send an identifier of the abnormal serving network to the PCF or the unified data management UDM, so that the PCF or the UDM updates a priority of the identifier of the abnormal serving network in a network selection policy, and sends the network selection policy to a terminal device; and/or
the processing module 1502 is further configured to determine an abnormal network slice based on the trusted policy information or based on the trusted policy information and the trusted collected information; and
the transceiver module 1501 is further configured to send an identifier of the abnormal network slice to a network slice selection function NSSF, so that the NSSF updates a priority of the identifier of the abnormal network slice in a slice selection policy, and/or the transceiver module 1501 is further configured to notify the access and mobility management function AMF and/or the session management function SMF to select another network slice with a stronger protection capability; and/or
the processing module 1502 is further configured to determine an abnormal node based on the trusted policy information or based on the trusted policy information and the trusted collected information; and
the transceiver module 1501 is further configured to send an identifier of the abnormal node to at least one of a network repository function NRF, a domain name server (Domain Name Server, DNS), the SMF, a network slice subnet management function (Network Slice Subnet Management Function, NSSMF), or another network function, so that at least one of the NRF, the DNS, the SMF, the NSSMF, or the another network function selects a node with a stronger protection capability, and/or the transceiver module 1501 is further configured to notify another network function to select a node with a stronger protection capability (for example, notify the SMF to select a UPF with a stronger protection capability).

FIG. 16 is a schematic diagram of an embodiment of a communication apparatus according to an embodiment of this application. The communication apparatus includes:
a transceiver module 1601, configured to receive a non-access stratum NAS message and/or user data, where a core network device may include an NEF, a DNS, an NWDAF, a UDM, a PCF, an AMF, an SMF, or the like, and may further include a network function node such as a network slice selection function (network slice selection function, NSSF), where
the transceiver module 1601 is further configured to obtain trusted policy information; and
a processing module 1602, configured to detect, based on the trusted policy information, whether the NAS message and/or the user data is abnormal.

If the NAS message and/or the user data is abnormal,
the processing module 1602 is further configured to notify and/or block the NAS message and/or a service corresponding to the user data.

In some optional embodiments of this application, the communication apparatus further includes:
the processing module 1602 is further configured to record abnormal signaling and/or abnormal data, where the abnormal signaling includes all or a part of the NAS message.

In some optional embodiments of this application, the receiving, by a core network device, a non-access stratum NAS message and/or user data includes:
the transceiver module 1601 is further configured to receive the non-access stratum NAS message;
the transceiver module 1601 is further configured to receive the NAS message; and/or
the transceiver module 1601 is further configured to receive the user data.

In some optional embodiments of this application, the obtaining, by the core network device, trusted policy information includes:
the transceiver module 1601 is further configured to obtain the trusted policy information from a trusted control node, where the trusted control node includes at least one of the policy control function PCF, the unified data management UDM, the network data analytics function NWDAF, or an independent network function entity.

In some optional embodiments of this application, the obtaining, by the core network device, trusted policy information includes:
the transceiver module 1601 is further configured to receive user plane exception information sent by a user plane function UPF, where the user plane exception information is generated by the UPF based on abnormal data; and
the processing module 1602 is further configured to generate the trusted policy information based on the user plane exception information; and/or
the transceiver module 1601 is further configured to receive the abnormal signaling sent by the SMF; and
the processing module 1602 is further configured to generate the trusted policy information based on the abnormal signaling; and/or
the transceiver module 1601 is further configured to receive user plane exception information sent by a management plane network management system; and
the processing module 1602 is further configured to generate the trusted policy information based on the user plane exception information.

The communication apparatus in the foregoing embodiments may be a network device, or may be a chip used in the network device, or another combined part, component, or the like that can implement a function of the network device. When the communication apparatus is a network device, the receiving module and the sending module may be a transceiver. The transceiver may include an antenna, a radio frequency circuit, and the like. The processing module may be a processor, for example, a baseband chip. When the communication apparatus is a component having a function of the network device, the receiving module and the sending module may be radio frequency units, and the processing module may be a processor. When the communication apparatus is a chip system, the receiving module may be an input port of the chip system, the sending module may be an output interface of the chip system, and the processing module may be a processor of the chip system, for example, a central processing unit (central processing unit, CPU).

In embodiments of this application, a memory included in the communication apparatus is mainly configured to store a software program and data, for example, store the first message and the second message described in the foregoing embodiments. The communication apparatus further has the following functions:

A communication apparatus includes:
a transceiver, configured to receive a non-access stratum NAS message, where
the transceiver is further configured to obtain trusted policy information; and
a processor, configured to detect, based on the trusted policy information, whether the NAS message is abnormal.

If the NAS message is abnormal,
the processor is further configured to notify and/or block the NAS message;
the transceiver is further configured to report abnormal signaling to a trusted control node; and/or
the transceiver is further configured to report the abnormal signaling to an access and mobility management function AMF, where the abnormal signaling includes all or a part of the NAS message.

In some optional embodiments of this application,
the transceiver is specifically configured to obtain the trusted policy information from the trusted control node, where the trusted control node includes at least one of a policy control function PCF, a unified data management UDM, a network data analytics function NWDAF, or an independent network function entity.

In some optional embodiments of this application,
the transceiver is specifically configured to receive user plane exception information sent by a user plane function UPF; and
the processor is specifically configured to generate the trusted policy information based on the user plane exception information.

The communication apparatus includes:
a transceiver, configured to receive a non-access stratum NAS message, where
the transceiver is further configured to obtain trusted policy information; and
a processor, configured to detect, based on the trusted policy information, whether the NAS message is abnormal.

If the NAS message is abnormal,
the processor is further configured to notify and/or block the NAS message;
the transceiver is further configured to report abnormal signaling to the trusted control node, where the abnormal signaling includes all or a part of the NAS message.

In some optional embodiments of this application,
the transceiver is specifically configured to obtain the trusted policy information from the trusted control node, where the trusted control node includes at least one of a policy control function PCF, a unified data management UDM, a network data analytics function NWDAF, or an independent network function entity.

In some optional embodiments of this application,
the transceiver is specifically configured to receive the abnormal signaling sent by a session management function SMF; and
the transceiver is specifically configured to generate the trusted policy information based on the abnormal signaling.

In some optional embodiments of this application,
the transceiver is specifically configured to send the abnormal signaling to the NWDAF; and
the transceiver is specifically configured to report the abnormal signaling to the trusted control node.

The communication apparatus includes:
a transceiver, configured to receive user data, where
the transceiver is further configured to obtain trusted policy information; and
a processor, configured to detect, based on the trusted policy information, whether the user data is abnormal.

If the NAS message is abnormal,
the processor is further configured to notify and/or block a service corresponding to the user data;
the transceiver is further configured to report abnormal data to a trusted control node;
the transceiver is further configured to report the abnormal data to a management plane network management system, where the abnormal data includes the user data; and/or
the transceiver is further configured to report the abnormal data to a session management function SMF, where the abnormal data includes the user data.

In some optional embodiments of this application,
the transceiver is specifically configured to obtain the trusted policy information from the trusted control node, where the trusted control node includes at least one of a policy control function PCF, a unified data management UDM, a network data analytics function NWDAF, or an independent network function entity.

In some optional embodiments of this application,
the transceiver is further configured to receive user plane exception information sent by the management plane network management system and/or the SMF, where the user plane exception information is generated by the management plane network management system and/or the SMF based on the abnormal data; and
the processor is further configured to generate the trusted policy information based on the user plane exception information.

In some optional embodiments of this application,
the transceiver is further configured to send the abnormal data to the NWDAF; and
the transceiver is further configured to report the abnormal data to the trusted control node.

The communication apparatus includes:
a transceiver, configured to receive information about an abnormal base station, where
the transceiver is further configured to obtain trusted policy information; and
a processor, configured to determine a first user plane function UPF based on the trusted policy information, where a protection capability of the first UPF is higher than that of a second UPF, and the first UPF is configured to currently process data of the abnormal base station.

In some optional embodiments of this application,
the transceiver is further configured to indicate the first UPF to process the data of the abnormal base station; and
the transceiver is further configured to indicate the second UPF to delete the data of the abnormal base station.

In some optional embodiments of this application,
the transceiver is specifically configured to receive the information about the abnormal base station from at least one of an access and mobility management function AMF, a UPF, or a network data analytics function NWDAF.

In some optional embodiments of this application,
the transceiver is further configured to obtain the trusted policy information from a trusted control node, where the trusted control node includes at least one of a policy control function PCF, a unified data management UDM, the network data analytics function NWDAF, or an independent network function entity.

The communication apparatus includes:
a transceiver, configured to obtain trusted policy information, where
the transceiver is further configured to receive information about abnormal user equipment or information about an abnormal home network, where the abnormal user equipment belongs to the abnormal home network; and
if a quantity of abnormal user equipments in the abnormal home network exceeds a first threshold,
a processor, configured to determine a first user plane function UPF based on the trusted policy information, where a protection capability of the first UPF is higher than that of a second UPF, and the first UPF is configured to currently process data of the abnormal home network.

In some optional embodiments of this application,
the transceiver is further configured to indicate the first UPF to process the data of the abnormal home network; and
the transceiver is further configured to indicate the second UPF to delete the data of the abnormal home network.

In some optional embodiments of this application,
the transceiver is further configured to receive the information about the abnormal user equipment or the information about the abnormal home network from at least one of an access and mobility management function AMF, the second UPF, or a network data analytics function NWDAF.

In some optional embodiments of this application,
the transceiver is further configured to obtain the trusted policy information from a trusted control node, where the trusted control node includes at least one of a policy control function PCF, a unified data management UDM, the network data analytics function NWDAF, or an independent network function entity.

The communication apparatus includes:
a transceiver, configured to obtain trusted collected information from at least one of a policy control function PCF, an access and mobility management function AMF, a session management function SMF, a user plane function UPF, a management plane network management system, a network exposure function NEF, a multi-access edge computing MEC, or an inter-public land mobile network user plane security function IPUPS; and
a processor, configured to determine trusted policy information based on the trusted collected information.

The transceiver is further configured to send the trusted policy information to at least one of the AMF, the SMF, the UPF, the management plane network management system, the NEF, the MEC, or the IPUPS.

In some optional embodiments of this application,
the transceiver is further configured to receive, through the NEF, the trusted collected information sent by the MEC; and
the transceiver is further configured to send the trusted policy information to the MEC through the NEF; and/or
the transceiver is further configured to receive, through the UPF, the trusted collected information sent by the MEC; and
the transceiver is further configured to send the trusted policy information to the MEC through the UPF.

In some optional embodiments of this application,
the trusted control node includes at least one of the policy control function PCF, a unified data management UDM, or a network data analytics function NWDAF.

In some optional embodiments of this application,
the processor is further configured to determine an abnormal serving network based on the trusted policy information or based on the trusted policy information and the trusted collected information; and
the transceiver is further configured to send an identifier of the abnormal serving network or an identifier of an abnormal serving slice to the policy control function PCF or the unified data management UDM, so that the PCF or the UDM updates a priority of the identifier of the abnormal serving network or the abnormal serving slice in a network selection policy, and sends the network selection policy to a terminal device; and/or
the processor is further configured to determine an abnormal network slice based on the trusted policy information or based on the trusted policy information and the trusted collected information; and
the transceiver is further configured to send an identifier of the abnormal network slice to a network slice selection function NSSF, so that the NSSF updates a priority of the identifier of the abnormal network slice in a slice selection policy, and/or the transceiver is further configured to notify the access and mobility management function AMF and/or the session management function SMF to select another network slice with a stronger protection capability; and/or
the processor is further configured to determine an abnormal node based on the trusted policy information or based on the trusted policy information and the trusted collected information; and
the transceiver is further configured to send an identifier of the abnormal node to at least one of a network repository function NRF, a domain name server (Domain Name Server, DNS), the SMF, a network slice subnet management function (Network Slice Subnet Management Function, NSSMF), or another network function, so that at least one of the NRF, the DNS, the SMF, the NSSMF, or the another network function selects a node with a stronger protection capability, and/or the transceiver is further configured to notify another network function to select a node with a stronger protection capability (for example, notify the SMF to select a UPF with a stronger protection capability).

The communication apparatus includes:
a transceiver, configured to receive a non-access stratum NAS message and/or user data, where a core network device may include an NEF, a DNS, an NWDAF, a UDM, a PCF, an AMF, an SMF, or the like, and may further include a network function node such as a network slice selection function (network slice selection function, NSSF), where
the transceiver is further configured to obtain trusted policy information; and
a processor, configured to detect, based on the trusted policy information, whether the NAS message and/or the user data is abnormal.

If the NAS message is abnormal,
the processor is further configured to notify and/or block the NAS message and/or a service corresponding to the user data.

In some optional embodiments of this application, the communication apparatus further includes:
the processor is further configured to record abnormal signaling and/or abnormal data, where the abnormal signaling includes all or a part of the NAS message.

In some optional embodiments of this application, the receiving, by a core network device, a non-access stratum NAS message and/or user data includes:
the transceiver is further configured to receive the non-access stratum NAS message;
the transceiver is further configured to receive the NAS message; and/or
the transceiver is further configured to receive the user data.

In some optional embodiments of this application, the obtaining, by the core network device, trusted policy information includes:
the transceiver is further configured to obtain the trusted policy information from a trusted control node, where the trusted control node includes at least one of the policy control function PCF, the unified data management UDM, the network data analytics function NWDAF, or an independent network function entity.

In some optional embodiments of this application, the obtaining, by the core network device, trusted policy information includes:
the transceiver is further configured to receive user plane exception information sent by a user plane function UPF, where the user plane exception information is generated by the UPF based on abnormal data; and
the processor is further configured to generate the trusted policy information based on the user plane exception information; and/or
the transceiver is further configured to receive the abnormal signaling sent by the SMF; and
the processor is further configured to generate the trusted policy information based on the abnormal signaling; and/or
the transceiver is further configured to receive user plane exception information sent by a management plane network management system; and
the processor is further configured to generate the trusted policy information based on the user plane exception information.

An embodiment of this application further provides a processing apparatus. FIG. 17 is a schematic diagram of a processing apparatus according to an embodiment of this application. The processing apparatus includes a processor and an interface. The processor is configured to perform the trusted communication method in any one of the foregoing method embodiments.

It should be understood that the processing apparatus may be a chip. The processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in a memory. The memory may be integrated into the processor, or may be located outside the processor and exist independently.

Herein, "implemented by hardware" means that a function of the foregoing module or unit is implemented through a hardware processing circuit that does not have a function of processing program instructions. The hardware processing circuit may include a discrete hardware component, or may be an integrated circuit. To reduce power consumption and a size, an integrated circuit is usually used for implementation. The hardware processing circuit may include an application-specific integrated circuit (application-specific integrated circuit, ASIC) or a programmable logic device (programmable logic device, PLD). The PLD may further include a field programmable gate array (field programmable gate array, FPGA), a complex programmable logic device (complex programmable logic device, CPLD), and the like. These hardware processing circuits may be an independently packaged semiconductor chip (for example, packaged into an ASIC), or may be integrated with another circuit (such as a CPU or a DSP) and then packaged into a semiconductor chip. For example, a plurality of hardware circuits and CPUs may be formed on one silicon base, and are independently packaged into a chip, where the chip is also referred to as a SoC; or a circuit that is configured to implement an FPGA function and a CPU may be formed on a silicon base, and are independently packaged into a chip, where the chip is also referred to as a SoPC (system-on-a-programmable-chip, system-on-a-programmable-chip).

This application further provides a communication system, including a communication apparatus (a core network device, a radio access network device, and/or a terminal device).

An embodiment of this application further provides a computer-readable storage medium, including instructions. When the instructions are run on a computer, the computer is enabled to perform the following steps.

Step A. A session management function SMF receives a non-access stratum NAS message.

Step B. The SMF obtains trusted policy information.

Step C. The SMF detects, based on the trusted policy information, whether the NAS message is abnormal.

Step D. If the NAS message is abnormal, the SMF notifies and/or blocks the NAS message; reports abnormal signaling to a trusted control node; and/or reports the abnormal signaling to an access and mobility management function AMF, where the abnormal signaling includes all or a part of the NAS message.

Step E. The SMF obtains the trusted policy information from the trusted control node, where the trusted control node includes at least one of a policy control function PCF, a unified data management UDM, a network data analytics function NWDAF, or an independent network function entity.

Step F. The SMF receives user plane exception information sent by a user plane function UPF.

Step G. The SMF generates the trusted policy information based on the user plane exception information.

Further/Alternatively, the computer is enabled to perform the following steps:
Step H. An access and mobility management function AMF receives a non-access stratum NAS message.
Step I. The AMF obtains trusted policy information.
Step J. The AMF detects, based on the trusted policy information, whether the NAS message is abnormal.
Step K. If the NAS message is abnormal, the AMF notifies and/or blocks the NAS message, and/or reports abnormal signaling to a trusted control node, where the abnormal signaling includes all or a part of the NAS message.
Step L. The AMF obtains the trusted policy information from the trusted control node, where the trusted control node includes at least one of a policy control function PCF, a unified data management UDM, a network data analytics function NWDAF, or an independent network function entity.
Step M. The AMF receives the abnormal signaling sent by a session management function SMF.
Step N. The AMF generates the trusted policy information based on the abnormal signaling.
Step O. The AMF sends the abnormal signaling to the NWDAF.
Step P. The NWDAF reports the abnormal signaling to the trusted control node.

Further/Alternatively, the computer is enabled to perform the following steps:
Step Q. A user plane function UPF receives user data.
Step R. The UPF obtains trusted policy information.
Step S. The UPF detects, based on the trusted policy information, whether the user data is abnormal.
Step T. If the user data is abnormal, the UPF notifies and/or blocks a service corresponding to the user data; reports abnormal data to a trusted control node; reports the abnormal data to a management plane network management system, where the abnormal data includes the user data; and/or reports the abnormal data to a session management function SMF, where the abnormal data includes the user data.
Step U. The UPF obtains the trusted policy information from the trusted control node, where the trusted control node includes at least one of a policy control function PCF, a unified data management UDM, a network data analytics function NWDAF, or an independent network function entity.
Step V. The UPF receives user plane exception information sent by the management plane network management system and/or the SMF, where the user plane exception information is generated by the management plane network management system and/or the SMF based on the abnormal data.
Step W. The UPF generates the trusted policy information based on the user plane exception information.
Step X. The UPF sends the abnormal data to the NWDAF.
Step Y. The NWDAF reports the abnormal data to the trusted control node.
Step Z. The session management function SMF receives information about an abnormal base station.
Step AA. The SMF obtains the trusted policy information.
Step AB. The SMF determines a first user plane function UPF based on the trusted policy information, where a protection capability of the first UPF is higher than that of a second UPF, and the first UPF is configured to currently process data of the abnormal base station.
Step AC. The SMF indicates the first UPF to process the data of the abnormal base station.
Step AD. The SMF indicates the second UPF to delete the data of the abnormal base station.
Step AE. The SMF receives the information about the abnormal base station from at least one of an access and mobility management function AMF, a UPF, or the network data analytics function NWDAF.
Step AF. The SMF obtains the trusted policy information from the trusted control node, where the trusted control node includes at least one of the policy control function PCF, the unified data management UDM, the network data analytics function NWDAF, or the independent network function entity.

Further/Alternatively, the computer is enabled to perform the following steps:
Step AG. A session management function SMF obtains trusted policy information.
Step AH. The SMF receives information about abnormal user equipment or information about an abnormal home network, where the abnormal user equipment belongs to the abnormal home network.
Step AI. If a quantity of abnormal user equipments in the abnormal home network exceeds a first threshold,
Step AJ. The SMF determines a first user plane function UPF based on the trusted policy information, where a protection capability of the first UPF is higher than that of a second UPF, and the first UPF is configured to currently process data of the abnormal home network.
Step AK. The SMF indicates the first UPF to process the data of the abnormal home network.
Step AL. The SMF indicates the second UPF to delete the data of the abnormal home network.
Step AM. The SMF receives the information about the abnormal user equipment or the information about the abnormal home network from at least one of an access and mobility management function AMF, the second UPF, or a network data analytics function NWDAF.
Step AN. The SMF obtains the trusted policy information from a trusted control node, where the trusted control node includes at least one of a policy control function PCF, a unified data management UDM, the network data analytics function NWDAF, or an independent network function entity.
Step AO. The trusted control node obtains trusted collected information from at least one of an access and mobility management function AMF, a session management function SMF, a user plane function UPF, a management plane network management system, a network exposure function NEF, a multi-access edge computing MEC, or an inter-public land mobile network user plane security function IPUPS.
Step AP. The trusted control node determines the trusted policy information based on the trusted collected information.
Step AQ. The trusted control node sends the trusted policy information to at least one of the AMF, the SMF, the UPF, the management plane network management system, the NEF, the MEC, or the IPUPS.
Step AR. The trusted control node receives, through the NEF, the trusted collected information sent by the MEC.
Step AS. The trusted control node sends the trusted policy information to the MEC through the NEF.

Further/Alternatively:
Step AT. The trusted control node receives, through the UPF, the trusted collected information sent by the MEC.
Step AU. The trusted control node sends the trusted policy information to the MEC through the UPF.
Step AV. The trusted control node includes at least one of the policy control function PCF, the unified data management UDM, the network data analytics function NWDAF, or the independent network function entity.
Step AW. The trusted control node determines an abnormal serving network based on the trusted policy information or based on the trusted policy information and the trusted collected information.
Step AX. The trusted control node sends an identifier of the abnormal serving network to the policy control function PCF or the UDM, so that the PCF or the UDM updates a priority of the identifier of the abnormal serving network in a network selection policy, and sends the network selection policy to a terminal device.

Further/Alternatively:
Step AW. The trusted control node determines an abnormal network slice based on the trusted policy information or based on the trusted policy information and the trusted collected information.
Step AX. The trusted control node sends an identifier of the abnormal network slice to a network slice selection function NSSF, so that the NSSF updates a priority of the identifier of the abnormal network slice in a slice selection policy (for example, lowers a priority of the abnormal network slice), and/or, the trusted control node notifies the access and mobility management function AMF and/or the session management function SMF to select another network slice with a stronger protection capability.

Further/Alternatively:
Step AW. The trusted control node determines an abnormal node based on the trusted policy information or based on the trusted policy information and the trusted collected information.
Step AX. The trusted control node sends an identifier of the abnormal node to at least one of a network repository function NRF, a domain name server (Domain Name Server, DNS), the SMF, a network slice subnet management function (Network Slice Subnet Management Function, NSSMF), or another network function, so that at least one of the NRF, the DNS, the SMF, the NSSMF, or the another network function selects a node with a stronger protection capability, and/or the trusted control node notifies another network function to select a node with a stronger protection capability (for example, notifies the SMF to select a UPF with a stronger protection capability).

The computer is enabled to perform the following steps:
Step AY. A core network device receives a non-access stratum NAS message and/or user data, where the core network device may include an NEF, a DNS, an NWDAF, a UDM, a PCF, an AMF, an SMF, or the like, and may further include a network function node such as a network slice selection function (network slice selection function, NSSF).
Step AZ. The core network device obtains trusted policy information.
Step BA. The core network device detects, based on the trusted policy information, whether the NAS message and/or the user data is abnormal.
Step BB. If the NAS message and/or the user data is abnormal, the core network device notifies and/or blocks the NAS message and/or a service corresponding to the user data.
Step BC. The core network device records abnormal signaling and/or abnormal data, where the abnormal signaling includes all or a part of the NAS message.
Step BD. The session management function SMF receives the non-access stratum NAS message.

Further/Alternatively:
Step BE. The access and mobility management function AMF receives the NAS message.

Further/Alternatively:
Step BF. The user plane function UPF receives the user data.
Step BG. The core network device obtains the trusted policy information from a trusted control node, where the trusted control node includes at least one of the policy control function PCF, the unified data management UDM, or the network data analytics function NWDAF.
Step BH. The session management function SMF receives user plane exception information sent by the user plane function UPF, where the user plane exception information is generated by the UPF based on abnormal data.
Step BI. The SMF generates the trusted policy information based on the user plane exception information.

Further/Alternatively:
Step BJ. The access and mobility management function AMF receives the abnormal signaling sent by the SMF.
Step BK. The AMF generates the trusted policy information based on the abnormal signaling.

Further/Alternatively:
Step BL. The UPF receives the user plane exception information sent by a management plane network management system.
Step BM. The UPF generates the trusted policy information based on the user plane exception information.

An embodiment of this application further provides a computer program product. The computer program product includes computer program code. When the computer program code is run on a computer, the computer is enabled to perform the foregoing steps A to G, steps H to P, steps Q to Y, steps Z to AF, steps AG to AN, steps AO to AX, and/or steps AY to BM.

An embodiment of this application further provides a chip, including a memory and a processor. The memory is configured to store a computer program, and the processor is configured to invoke the computer program from the memory and run the computer program, so that the chip performs the foregoing steps A to G, steps H to P, steps Q to Y, steps Z to AF, steps AG to AN, steps AO to AX, and/or steps AY to BM.

An embodiment of this application further provides a chip, including a processor. The processor is configured to invoke and run a computer program, so that the chip performs the foregoing steps A to G, steps H to P, steps Q to Y, steps Z to AF, steps AG to AN, steps AO to AX, and/or steps AY to BM.

In addition, it should be noted that the described apparatus embodiment is merely an example. The units described as separate parts may or may not be physically separate, and parts displayed as units may or may not be physical units, may be located in one position, or may be distributed on a plurality of network units. Some or all of the modules may be selected based on actual requirements to achieve the objectives of the solutions of embodiments. In addition, in the accompanying drawings of the apparatus embodiments provided by this application, connection relationships between modules indicate that the modules have communication connections with each other, which may be specifically implemented as one or more communications buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device to perform the methods in embodiments of this application.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, communication apparatus, computing device, or data center to another website, computer, communication apparatus, computing device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a communication apparatus or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State drive, SSD)), or the like.

It should be understood that "one embodiment" or "an embodiment" mentioned in the entire specification does not mean that particular features, structures, or characteristics related to embodiment are included in at least one embodiment of this application. Therefore, "in one embodiment" or "in an embodiment" appearing in the specification does not refer to a same embodiment. In addition, these particular features, structures, or characteristics may be combined in one or more embodiments by using any appropriate manner. It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in embodiments of this application, "B corresponding to A" indicates that B is associated with A, and B may be determined according to A. However, it should be further understood that determining B based on A does not mean that B is determined based only on A. B may alternatively be determined based on A and/or other information.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) to perform all or some of the steps of the method described in embodiments of this application.

In conclusion, the foregoing descriptions are merely examples of embodiments of the technical solutions of this application, but are not intended to limit the protection scope of this application. Any modification, equivalent replacement, or improvement made without departing from the spirit and principle of this application shall fall within the protection scope of this application.

## Claims

1. A trusted communication method, comprising:
receiving, by a session management function SMF, a non-access stratum NAS message;
obtaining, by the SMF, trusted policy information;
detecting, by the SMF based on the trusted policy information, whether the NAS message is abnormal; and
if the NAS message is abnormal, notifying and/or blocking, by the SMF, the NAS message; reporting trusted collected information to a trusted control node; and/or reporting the trusted collected information to an access and mobility management function AMF.

2. The method according to claim 1, wherein the obtaining, by the SMF, trusted policy information comprises:
obtaining, by the SMF, the trusted policy information from the trusted control node, wherein the trusted control node comprises an independent network function entity or at least one of a policy control function PCF, a unified data management UDM, or a network data analytics function NWDAF; or
receiving, by the SMF, user plane exception information sent by a user plane function UPF; and
generating, by the SMF, the trusted policy information based on the user plane exception information.

3. A trusted communication method, comprising:
receiving, by an access and mobility management function AMF, a non-access stratum NAS message;
obtaining, by the AMF, trusted policy information;
detecting, by the AMF based on the trusted policy information, whether the NAS message is abnormal; and
if the NAS message is abnormal, notifying and/or blocking, by the AMF, the NAS message, and/or reporting trusted collected information to a trusted control node.

4. The method according to claim 3, wherein the obtaining, by the AMF, trusted policy information comprises:
obtaining, by the AMF, the trusted policy information from the trusted control node, wherein the trusted control node comprises an independent network function entity or at least one of a policy control function PCF, a unified data management UDM, or a network data analytics function NWDAF; or
receiving, by the AMF, the trusted collected information sent by a session management function SMF; and
generating, by the AMF, the trusted policy information based on the trusted collected information.

5. The method according to claim 3 or 4, wherein the reporting, by the AMF, trusted collected information to a trusted control node comprises:
sending, by the AMF, the trusted collected information to the NWDAF; and
reporting, by the NWDAF, the trusted collected information to the trusted control node.

6. A trusted communication method, comprising:
receiving, by a user plane function UPF, user data;
obtaining, by the UPF, trusted policy information;
detecting, by the UPF based on the trusted policy information, whether the user data is abnormal; and
if the user data is abnormal, notifying and/or blocking, by the UPF, a service corresponding to the user data; reporting trusted collected information to a trusted control node; reporting the trusted collected information to a management plane network management system; and/or reporting the trusted collected information to a session management function SMF.

7. The method according to claim 6, wherein the obtaining, by the UPF, trusted policy information comprises:
obtaining, by the UPF, the trusted policy information from the trusted control node, wherein the trusted control node comprises at least one of a policy control function PCF, a unified data management UDM, or a network data analytics function NWDAF; or
receiving, by the UPF, user plane exception information sent by the management plane network management system and/or the SMF, wherein the user plane exception information is generated by the management plane network management system and/or the SMF based on the trusted collected information; and
generating, by the UPF, the trusted policy information based on the user plane exception information.

8. The method according to claim 6 or 7, wherein the reporting, by the UPF, trusted collected information to a trusted control node comprises:
sending, by the UPF, the trusted collected information to the NWDAF; and
reporting, by the NWDAF, the trusted collected information to the trusted control node.

9. A trusted communication method, comprising:
receiving, by a session management function SMF, information about an abnormal base station from at least one of an access and mobility management function AMF, a user plane function UPF, a network data analytics function NWDAF, or an independent network function entity;
obtaining, by the SMF, trusted policy information from a trusted control node, wherein the trusted control node comprises at least one of a policy control function PCF, a unified data management UDM, the network data analytics function NWDAF, or the independent network function entity;
determining, by the SMF, a first user plane function UPF based on the trusted policy information, wherein a protection capability of the first UPF is higher than that of a second UPF, and the second UPF is configured to currently process data of the abnormal base station;
indicating, by the SMF, the first UPF to process the data of the abnormal base station; and
indicating, by the SMF, the second UPF to delete the data of the abnormal base station.

10. A trusted communication method, comprising:
obtaining, by a session management function SMF, trusted policy information from a trusted control node, wherein the trusted control node comprises at least one of a policy control function PCF, a unified data management UDM, a network data analytics function NWDAF, or an independent network function entity;
receiving, by the SMF, information about abnormal user equipment or information about an abnormal home network from at least one of an access and mobility management function AMF, a second UPF, the network data analytics function NWDAF, or the independent network function entity, wherein the abnormal user equipment belongs to the abnormal home network; and
if a quantity of abnormal user equipments in the abnormal home network exceeds a first threshold,
determining, by the SMF, a first user plane function UPF based on the trusted policy information, wherein a protection capability of the first UPF is higher than that of a second UPF, and the second UPF is configured to currently process data of the abnormal home network;
indicating, by the SMF, the first UPF to process the data of the abnormal home network; and
indicating, by the SMF, the second UPF to delete the data of the abnormal home network.

11. A trusted communication method, comprising:
obtaining, by a trusted control node, trusted collected information from at least one of an access and mobility management function AMF, a session management function SMF, a user plane function UPF, a management plane network management system, a network exposure function NEF, a multi-access edge computing MEC, or an inter-public land mobile network user plane security function IPUPS, wherein
the trusted control node comprises at least one of a policy control function PCF, a unified data management UDM, a network data analytics function NWDAF, or an independent network function entity;
determining, by the trusted control node, trusted policy information based on the trusted collected information; and
sending, by the trusted control node, the trusted policy information to at least one of the AMF, the SMF, the UPF, the management plane network management system, the NEF, the MEC, or the IPUPS.

12. The method according to claim 11, wherein the method specifically comprises:
receiving, by the trusted control node through the NEF, the trusted collected information sent by the MEC; and
sending, by the trusted control node, the trusted policy information to the MEC through the NEF; and/or
receiving, by the trusted control node through the UPF, the trusted collected information sent by the MEC; and
sending, by the trusted control node, the trusted policy information to the MEC through the UPF.

13. The method according to claim 11 or 12, wherein the method further comprises:
determining, by the trusted control node, an abnormal serving network based on the trusted policy information or based on the trusted policy information and the trusted collected information; and
sending, by the trusted control node, an identifier of the abnormal serving network to the policy control function PCF or the unified data management UDM, so that the PCF or the UDM updates a priority of the identifier of the abnormal serving network in a network selection policy, and sends the network selection policy to a terminal device; and/or
determining, by the trusted control node, an abnormal network slice based on the trusted policy information or based on the trusted policy information and the trusted collected information; and
sending, by the trusted control node, an identifier of the abnormal network slice to a network slice selection function NSSF, so that the NSSF updates a priority of the identifier of the abnormal network slice in a slice selection policy, and/or notifying, by the trusted control node, the AMF and/or the SMF to select another network slice with a stronger protection capability; and/or
determining, by the trusted control node, an abnormal node based on the trusted policy information or based on the trusted policy information and the trusted collected information; and
sending, by the trusted control node, an identifier of the abnormal node to a network repository function NRF, so that the NRF selects a node with a stronger protection capability, and/or notifying, by the trusted control node, another network function to select a node with a stronger protection capability.

14. A communication apparatus, comprising:
a transceiver, configured to receive a non-access stratum NAS message, wherein
the transceiver is further configured to obtain trusted policy information; and
a processor, configured to detect, based on the trusted policy information, whether the NAS message is abnormal, wherein
if the NAS message is abnormal,
the processor is further configured to notify and/or block the NAS message;
the transceiver is further configured to report trusted collected information to a trusted control node; and/or
the transceiver is further configured to report the trusted collected information to an access and mobility management function AMF.

15. The communication apparatus according to claim 14, wherein
the transceiver is specifically configured to obtain the trusted policy information from the trusted control node, wherein the trusted control node comprises at least one of a policy control function PCF, a unified data management UDM, a network data analytics function NWDAF, or an independent network function entity; or
the transceiver is specifically configured to receive user plane exception information sent by a user plane function UPF; and
the processor is specifically configured to generate the trusted policy information based on the user plane exception information.

16. A communication apparatus, comprising:
a transceiver, configured to receive a non-access stratum NAS message, wherein
the transceiver is further configured to obtain trusted policy information; and
a processor, configured to detect, based on the trusted policy information, whether the NAS message is abnormal, wherein
if the NAS message is abnormal,
the processor is further configured to notify and/or block the NAS message; and/or
the transceiver is further configured to report trusted collected information to a trusted control node.

17. The communication apparatus according to claim 16, wherein
the transceiver is specifically configured to obtain the trusted policy information from the trusted control node, wherein the trusted control node comprises at least one of a policy control function PCF, a unified data management UDM, a network data analytics function NWDAF, or an independent network function entity; or
the transceiver is specifically configured to receive the trusted collected information sent by a session management function SMF; and
the transceiver is specifically configured to generate the trusted policy information based on the trusted collected information.

18. The communication apparatus according to claim 16 or 17, wherein
the transceiver is specifically configured to send the trusted collected information to the NWDAF; and
the transceiver is specifically configured to report the trusted collected information to the trusted control node.

19. A communication apparatus, comprising:
a transceiver, configured to receive user data, wherein
the transceiver is further configured to obtain trusted policy information; and
a processor, configured to detect, based on the trusted policy information, whether the user data is abnormal, wherein
if the user data is abnormal,
the processor is further configured to notify and/or block a service corresponding to the user data;
the transceiver is further configured to report trusted collected information to a trusted control node;
the transceiver is further configured to report the trusted collected information to a management plane network management system; and/or
the transceiver is further configured to report the trusted collected information to a session management function SMF.

20. The communication apparatus according to claim 19, wherein
the transceiver is specifically configured to obtain the trusted policy information from the trusted control node, wherein the trusted control node comprises at least one of a policy control function PCF, a unified data management UDM, a network data analytics function NWDAF, or an independent network function entity; or
the transceiver is further configured to receive user plane exception information sent by the management plane network management system and/or the SMF, wherein the user plane exception information is generated by the management plane network management system and/or the SMF based on the trusted collected information; and
the processor is further configured to generate the trusted policy information based on the user plane exception information.

21. The communication apparatus according to claim 19 or 20, wherein
the transceiver is further configured to send the trusted collected information to the NWDAF; and
the transceiver is further configured to report the trusted collected information to the trusted control node.

22. A communication apparatus, comprising:
a transceiver, configured to receive information about an abnormal base station from at least one of an access and mobility management function AMF, a UPF, a network data analytics function NWDAF, or an independent network function entity, wherein
the transceiver is further configured to obtain trusted policy information from a trusted control node, wherein the trusted control node comprises at least one of a policy control function PCF, a unified data management UDM, the network data analytics function NWDAF, or the independent network function entity; and
a processor, configured to determine a first user plane function UPF based on the trusted policy information, wherein a protection capability of the first UPF is higher than that of a second UPF, and the second UPF is configured to currently process data of the abnormal base station, wherein
the processor is further configured to indicate the first UPF to process the data of the abnormal base station; and
the processor is further configured to indicate the second UPF to delete the data of the abnormal base station.

23. A communication apparatus, comprising:
a transceiver, configured to obtain trusted policy information from a trusted control node, wherein the trusted control node comprises at least one of a policy control function PCF, a unified data management UDM, a network data analytics function NWDAF, or an independent network function entity, wherein
the transceiver is further configured to receive information about abnormal user equipment or information about an abnormal home network from at least one of an access and mobility management function AMF, a second user plane function UPF, the network data analytics function NWDAF, or the independent network function entity, wherein the abnormal user equipment belongs to the abnormal home network; and
a processor, configured to: if a quantity of abnormal user equipments in the abnormal home network exceeds a first threshold, determine a first user plane function UPF based on the trusted policy information, wherein a protection capability of the first UPF is higher than that of a second UPF, and the second UPF is configured to currently process data of the abnormal home network, wherein
the processor is further configured to indicate the first UPF to process the data of the abnormal home network; and
the processor is further configured to indicate the second UPF to delete the data of the abnormal home network.

24. A communication apparatus, comprising:
a transceiver, configured to obtain trusted collected information from at least one of a policy control function PCF, an access and mobility management function AMF, a session management function SMF, a user plane function UPF, a management plane network management system, a network exposure function NEF, a multi-access edge computing MEC, or an inter-public land mobile network user plane security function IPUPS; and
a processor, configured to determine trusted policy information based on the trusted collected information, wherein
the transceiver is further configured to send the trusted policy information to at least one of the AMF, the SMF, the UPF, the management plane network management system, the NEF, the MEC, or the IPUPS.

25. The communication apparatus according to claim 24, wherein
the transceiver is further configured to receive, through the NEF, the trusted collected information sent by the MEC; and
the transceiver is further configured to send the trusted policy information to the MEC through the NEF; and/or
the transceiver is further configured to receive, through the UPF, the trusted collected information sent by the MEC; and
the transceiver is further configured to send the trusted policy information to the MEC through the UPF.

26. The communication apparatus according to claim 24 or 25, wherein
the processor is further configured to determine an abnormal serving network based on the trusted policy information or based on the trusted policy information and the trusted collected information; and
the transceiver is further configured to send an identifier of the abnormal serving network to the policy control function PCF or the UDM, so that the PCF or the UDM updates a priority of the identifier of the abnormal serving network in a network selection policy, and sends the network selection policy to a terminal device; and/or
the processor is further configured to determine an abnormal network slice based on the trusted policy information or based on the trusted policy information and the trusted collected information; and
the transceiver is further configured to send an identifier of the abnormal network slice to a network slice selection function NSSF, so that the NSSF updates a priority of the identifier of the abnormal network slice in a slice selection policy, and/or the transceiver is further configured to notify the access and mobility management function AMF and/or the session management function SMF to select another network slice with a stronger protection capability; and/or
the processor is further configured to determine an abnormal node based on the trusted policy information or based on the trusted policy information and the trusted collected information; and
the transceiver is further configured to send an identifier of the abnormal node to a network repository function NRF, so that the NRF selects a node with a stronger protection capability, and/or the transceiver is further configured to notify another network function to select a node with a stronger protection capability.

27. A computer program storage medium, wherein the computer program storage medium comprises program instructions; and when the program instructions are directly or indirectly executed, the method according to any one of claim 1 or 2, claims 3 to 5, claims 6 to 8, claim 9, claim 10, or claims 11 to 13 is performed.

28. A chip system, wherein the chip system comprises at least one processor; and when program instructions are executed in the at least one processor, the method according to any one of claim 1 or 2, claims 3 to 5, claims 6 to 8, claim 9, claim 10, or claims 11 to 13 is performed.

29. A communication system, wherein the communication system comprises the communication apparatus according to any one of claim 14 or 15, claims 16 to 18, claims 19 to 21, claim 22, claim 23, or claims 24 to 26.
